(19) Europäisches Patentamt
European Patent Office
Office européen des brevets

(11) **EP 0 955 323 B2**

(12) **NEUE EUROPÄISCHE PATENTSCHRIFT**
Nach dem Einspruchsverfahren


(45) Veröffentlichungstag und Bekanntmachung des Hinweises auf die Entscheidung über den Einspruch:
**11.03.2009 Patentblatt 2009/11**

(45) Hinweis auf die Patenterteilung:
**11.08.2004 Patentblatt 2004/33**

(21) Anmeldenummer: **99108532.5**

(22) Anmeldetag: **04.05.1999**

(51) Int Cl.:
***C08F 257/02*** (2006.01) ***C08F 285/00*** (2006.01)
***C09D 151/00*** (2006.01) ***C09D 5/29*** (2006.01)
***B05D 5/06*** (2006.01)


(54) **Kern/Schale-Partikel, ihre Herstellung und Verwendung**

Core - shell particles, their production and use

Particules à structure coeur-coquille, procédé de leur préparation et leur utilisation


(84) Benannte Vertragsstaaten:
**DE FR GB IT**

(30) Priorität: **04.05.1998 DE 19820302**

(43) Veröffentlichungstag der Anmeldung:
**10.11.1999 Patentblatt 1999/45**



(73) Patentinhaber: **BASF SE**
**67056 Ludwigshafen (DE)**

(72) Erfinder:
- **Rupaner, Robert Dr.**
**12500-000 Guaratingueta, SP (BR)**
- **Leyrer, Reinhold J. Dr.**
**67125 Dannstadt (DE)**
- **Schumacher, Peter Dr.**
**68163 Mannheim (DE)**

(74) Vertreter: **Isenbruck, Günter**
**Isenbruck Bösl Hörschler Wichmann Huhn LLP**
**Patentanwälte**
**Theodor-Heuss-Anlage 12**
**68165 Mannheim (DE)**


(56) Entgegenhaltungen:
**EP-A- 0 399 729**
**EP-A- 0 441 559**
**WO-A-95/32247**
**DE-A- 19 727 060**
**DE-C- 2 114 682**
**US-A- 4 391 928**
**US-A- 4 683 269**

Bemerkungen:
Die Akte enthält technische Angaben, die nach dem Eingang der Anmeldung eingereicht wurden und die nicht in dieser Patentschrift enthalten sind.

EP 0 955 323 B2

## Beschreibung

Die vorliegende Erfindung betrifft Kern/Schale-Partikel, deren Schale verfilmbar ist, während der Kern unter den Bedingungen der Schalenverfilmung im wesentlichen formbeständig ist und deren Kern- und Schalematerial einen Unterschied im Lichtbrechungsindex aufweisen, deren Herstellung sowie Zubereitungen dieser Partikel, wie sie in den unabhängigen Ansprüchen definiert sind.

Die Erfindung betrifft ferner die Verwendung dieser Partikel und ihrer Zubereitungen zur Herstellung organischer Effektfarbmittel, die in einer kontinuierlichen Matrixphase, dem verfilmten Schalematerial, zumindest Domänen regelmäßig angeordneter Kerne der Kern/Schale-Partikel aufweisen.

Schließlich betrifft die Erfindung die Verwendung der erfindungsgemäßen Kern/Schale-Partikel oder der genannten Zubereitungen zur Herstellung von dekorativen und/oder schützenden Überzügen sowie die Herstellung von Lacken Druckfarben und Tinten, die die erfindungsgemäßen Kern/Schale-Partikel als latente Effektfarbmittel enthalten.

Polymere Kern/Schale-Partikel sind zur Herstellung von Klebstoffen, Bindersystemen, insbesondere auch als Verstärkungsmaterialien bei der Produktion bestimmter Gruppen von Verbundwerkstoffen empfohlen worden. Solche Verbundwerkstoffe bestehen aus einer Kunststoffmatrix und darin eingebetteten Verstärkungselementen. Ein Problem bei der Produktion derartiger Werkstoffe besteht in der Herstellung einer formschlüssigen Verbindung zwischen Matrix- und Verstärkungsmaterial. Nur wenn eine solche Verbindung besteht, können Kräfte von der Matrix auf die Verstärkungselemente übertragen werden. Je stärker sich die mechanischen Eigenschaften von Matrix- und Verstärkungsmaterial, Elastizität, Härte, Verformbarkeit, voneinander unterscheiden, umso größer ist die Gefahr der Ablösung der Matrix von den Verstärkungselementen. Dieser Gefahr soll dadurch begegnet werden, daß die polymeren Verstärkungspartikel mit einem zweiten Polymermaterial ummantelt werden, das dem Matrixmaterial ähnlicher ist und daher eine festere Bindung zur Matrix eingehen kann. (Young-Sam Kim, "Synthese und Charakterisierung von mehrphasigen polymeren Latices mit Kern/Schale-Morphologie", Diss. Univ. Karlsruhe (TH), Verlag Shaker Aachen, (1993), Seiten 2-22.) Zusätzlich ist auch empfohlen worden, das Ummantelungspolymer auf das Verstärkungspolymer aufzupfropfen, um mittels kovalenter Bindungen auch eine Ablösung der Schale von den Verstärkungspartikeln zu vermeiden. (W.-M. Billig-Peters, "Kern-Schale-Polymere mit Hilfe polymerer Azoinitiatoren", Diss. Univ. Bayreuth, (1991).

Die gezielte Herstellung von Kern/Schale-Polymeren erfolgt in der Regel durch stufenweise Emulsionspolymerisation, wobei in der ersten Stufe zunächst ein Latex aus Kernpartikeln erzeugt, und in der zweiten Stufe das Schalepolymer hergestellt wird, wobei die Kernpartikel als "Saat-Partikel" wirken auf deren Oberfläche sich die Schalepolymeren vorzugsweise abscheiden.

Die Abscheidung kann zu einer mehr oder weniger symmetrischen Schale auf das Kernpartikelchen aufwachsen, es können aber auch unregelmäßige Abscheidungen erfolgen, so daß Gebilde von brombeerartigem Aussehen entstehen. Ein guter Überblick über die Herstellung von zweiphasigen Polymerteilchen und die dabei auftretenden Erscheinungen, insbesondere die Ausbildung von Kern/Schale-Partikeln, findet sich in der Dissertation von Katharina Landfester, "Synthese und Charakterisierung von Kem-Schale-Latices mit Elektronenmikroskopie und Festkörper-NMR", Universität Mainz, (1995).

Effektfarbmittel sind Farbmittel, die bei Variation der Blickrichtung (des Aufsichtswinkels) den Farbeindruck, die Helligkeit und/oder die Reflektivität ändern. Sie weisen in der Regel eine plättchenförmige Struktur auf, d.h. daß die Dicke der Pigmentteilchen deutlich geringer ist als ihre laterale Ausdehnung.

Bekannte Beispiele für Effektfarbmittel sind Aluminiumflakes oder die Pigmente, die unter den Bezeichnungen ®Mica, ®Iriodin oder ®Paliochrom im Handel sind.

Metalleffektpigmente z.B. Aluminiumflakes rufen bei senkrechter Betrachtung einen Spiegeleffekt hervor, bei der Betrachtung von der Seite tritt dieser nicht in Erscheinung. Es ist daher ein Hell-Dunkel-Effekt zu beobachten. Die gleiche Erscheinung findet sich auch bei den Mica Effektpigmenten auf Basis von Glimmer.

Iriodin- und Paliochrom-Pigmente weisen zusätzlich verstärkte Interferenzeffekte bzw. Eigenabsorption auf. Bei ihnen ist, neben dem Hell-Dunkel-Effekt auch eine schwache Farbänderung bei Änderung des Betrachtungswinkels zu beobachten. (Literatur: Dr.U.Zorll, "Perlglanzpigmente",Vinantz Verlag,ISBN 3-87870-429-1).

Aus der US-A-4 434 010 sind Pigmente auf anorganischer Basis bekannt, die stark ausgeprägte Farbflops aufweisen. Diese Pigmente sind gekennzeichnet durch einen extrem homogenen Aufbau aus Schichten mit unterschiedlichen Brechungsindices. Dieser Aufbau führt zu ausgeprägten Interferenzeffekten, die für die Farberzeugung ausgenutzt werden. Die Herstellung dieser Pigmente ist allerdings schwierig und nur mittels aufwendiger und kostspieliger Produktionsverfahren möglich.

Aus der US-A-5 364 557 sind organische Effektpigmente auf der Basis von cholesterischen Flüssigkeiten bekannt. Bei diesen ergibt sich ein Interferenzeffekt durch eine helikale Überstruktur. Auch hier sind die für die Herstellung erforderlichen Materialien kompliziert herzustellen und daher sehr kostspielig. Die Produktion der Pigmente aus den cholesterischen Flüssigkristallen (LCs) erfolgt in der Weise, daß die cholesterische Masse in dünner Schicht auf eine Trägerfolie aufgebracht, in der LC-Phase eine photochemische Polymerisation durchgeführt, und der so erhaltene Film von der Folie abgelöst und gemahlen wird. Neben der teueren Herstellung der Ausgangsmaterialien ist es ein sehr

gravierender Nachteil dieses Verfahrens, daß während des Produktionsprozesses der Orientierung der LCs allergrößte Aufmerksamkeit gewidmet werden muß, da diese bereits durch kleinste Verunreinigungen negativ beeinflußt werden kann.

Ein Verfahren zum Beschichten und Bedrucken von Substraten, bei dem cholesterische Flüssigkristalle zum Einsatz kommen, ist aus der WO 96/02597 bekannt. Bei diesem Verfahren werden eine oder mehrere flüssigkristalline Verbindungen, von denen mindestens eine chiral ist, und die eine oder zwei polymerisierbare Gruppen aufweisen, zusammen mit geeigneten Comonomeren auf ein Substrat aufgetragen - sofern dies durch ein Druckverfahren geschieht, werden der Mischung noch Dispergiermittel zugefügt - und copolymerisiert. Die so erhaltenen Schichten können, wenn sie spröde sind, vom Substrat abgelöst, zerkleinert und als Pigmente verwendet werden.

Es sind ferner wäßrige, monodisperse Polymerdispersionen bekannt, z.B. aus T. Okubu, Prog.Polym.Sci. 18 (1993) 481-517; und W. Luck, H. Wesslau, Festschrift Carl Wurstler, BASF 1960, C.A.:55:14009d, die in flüssiger Form, gegebenenfalls nach Nachreinigung, zu ausgeprägter Latex-Kristallisation neigen und dadurch zu Farbeffekten führen.

Zur Herstellung monodisperser Partikel sind eine Vielzahl von Publikationen bekannt, z.B. EP-A-0 639 590 (Herstellung durch Fällungspolymerisation), A.Rudin, J.Polym.Sci.,A. Polym.Sci. 33 (1995) 1849-1857 (monodisperse Partikel mit Kern-Schale-Struktur), EP-A-0 292 261 (Herstellung unter Zusatz von Saatpartikeln).

In der EP-A-0 441 559 werden Kern-Schale Polymere mit unterschiedlichen Brechungsindices der Schichten und ihre Verwendung als Additive zu Papierbeschichtungsmitteln beschrieben.

In neuerer Zeit sind wärmegesteuerte optische Schaltelemente bekannt geworden (SCIENCE, Bd.274, (1996), Seiten 959-960), bei denen die Temperaturabhängigkeit der Teilchengröße von Poly-(N-isopropylacrylamid)-dispersionen bzw. der Volumen/Temperatur-Zusammenhang von Poly-(N-isopropylacrylamid)-Gelen ausgenutzt wird. Eine erste Ausführungsform dieser Schalter besteht aus einer wäßrigen Poly-(N-isopropylacrylamid)-dispersion, deren Teilchen sich gitterförmig anordnen und unterhalb der Phasenübergangstemperatur wesentlich größer sind, als oberhalb derselben. Dies hat zur Folge, daß die Extinktion bei ca. 530 nm im Temperaturbereich zwischen 10 und 40°C stark ansteigt. Das System wirkt somit als optischer Schalter und Begrenzer.

Bei einer zweiten Ausführungsform werden hochgeladene Polystyrolteilchen, die ein Raumgitter bilden, in ein Poly-(N-isopropylacrylamid)-Hydrogel eingebettet. Bei Temperaturänderung ändert sich das Volumen des Hydrogels und mit ihm der Gitterabstand der Polystyrolteilchen. Die Folge ist, daß sich bei einer Temperaturänderung von ca. 10 auf ca. 40°C die Lage des Absorptionsmaximums von ca.700 auf ca. 460 nm verschiebt. Dieses System kann als abstimmbares optisches Filter eingesetzt werden. Für die Anwendung als Farbmittel oder Pigmente sind diese Materialien naturgemäß nicht geeignet.

Eine Aufgabe der vorliegenden Erfindung war es, ein Material bereitzustellen, aus dem durch einfache Maßnahmen organische Effektfarbmittel kostengünstig hergestellt werden können. Die erhaltenen Effektfarbmittel sollen gute allgemeine Echtheiten haben, insbesondere in organischen und wäßrigen Medien keine Quellbarkeit aufweisen.

Diese Aufgabe wird gelöst durch die im Folgenden beschriebenen Kern/Schale-Partikel und deren Zubereitungen.

Ein Gegenstand der Erfindung sind organische Kern/Schale- Partikel, deren Kern- und Schalenmaterial ein Zweiphasensystem ausbilden können, die durch die Merkmale der unabhängigen Ansprüche 1 und 2 gekennzeichnet sind.

Das für die Kerne geltende Merkmal, dass sie im wesentlichen formbeständig sind, bedeutet, dass sich ihre Form und Größe im Verlauf der Verfilmung nicht so stark ändert, dass die Verwendung der Kern/Schale-Partikel zur Herstellung von Effektfarbmitteln unmöglich wird. In der Regel sind Änderungen ihrer Abmessungen von bis zu ± 10% ohne gravierende Nachteile zulässig.

Das Merkmal "geringe Quellbarkeit" der Kerne durch das Schalenmaterial bedeutet, dass der mittlere Durchmesser der Kerne sich um höchstens 10% des Ursprungswertes vergrößert, wenn sie in das Schalenmaterial eingebettet werden. Es ist besonders vorteilhaft, wenn die Kerne nicht nur im Schalenmaterial selbst, sondern auch in Lösungen, Dispersionen oder Schmelzen oder in flüssigen Vorstufen desselben eine möglichst geringe Quellbarkeit aufweisen.

Von essentieller Bedeutung ist der Unterschied $\Delta n$ im Brechungsindex zwischen dem Kemmaterial und der Matrix, die bei der Verfilmung des Schalenmaterials der erfindungsgemäßen Kern/Schale-Partikel entsteht. Er beträgt vorzugsweise mindestens 0,01, insbesondere mindestens 0,1 Einheiten.

Dabei kann das Kernmaterial den höheren, die Matrix den niedrigeren Brechungsindex haben oder umgekehrt. Bevorzugt ist der erste Fall.

In den erfindungsgemäßen Kern/Schale-Partikeln beträgt das Gewichtsverhältnis von Kern : Schale vorzugsweise 2:1 bis 10:1, insbesondere 2,5:1 bis 5:1.

Für die beabsichtigte Verwendung der erfindungsgemäßen Kern/Schale-Partikel zur Herstellung von Effektfarbmitteln ist es wichtig, dass das Schalenmaterial verfilmbar ist, d.h., dass es durch einfache Maßnahmen soweit erweicht, visco-elastisch plastifiziert oder verflüssigt werden kann, dass die Kerne der Kern/Schale-Partikel zumindest Domänen regelmäßiger Anordnung ausbilden können. Das verfilmte Schalenmaterial bildet dann je nach seinem Mengenanteil in den Kern/Schale-Partikeln entweder eine kontinuierliche, alle Zwischenräume zwischen den Kempartikeln

ausfüllende Phase, eine Matrix, oder es bildet nur im Bereich der Berührungspunkte der Kempartikel Klebepunkte, durch die diese in regelmäßiger Anordnung fixiert werden. (Das Schalenmaterial kann daher auch synomym als Matrixmaterial oder Matrixphase bezeichnet werden.)

Die in der durch Verfilmung der Schale der Kern/Schale-Partikel gebildeten Matrix regelmäßig angeordneten Kerne bilden ein Beugungsgitter, das Interferenzerscheinungen hervorruft und dadurch zu sehr interessanten Farbeffekten führt.

Die Kerne der erfindungsgemäßen Kern/Schale-Partikel haben im Wesentlichen sphärische, vorzugsweise kugelförmige, Gestalt. Sie bilden bei der Verflüssigung oder Erweichung des Schalenmaterials während der Verfilmung die genannten makroskopischen Domänen kristallähnlicher Struktur aus.

In vielen Fällen ordnen sich die Kerne in dieser Struktur in einer dichten Kugelpackung an.

Die Kerne der erfindungsgemäßen Kern/Schale-Partikel haben vorzugsweise eine Teilchengröße von 150 bis 500 nm, insbesondere von 200 bis 400 nm. Vorzugsweise weisen sie eine monodisperse Verteilung auf, d.h. sie liegen in einer engen Teilchengrößenverteilung, vor.

Zur Charakterisierung der Teilchengrößenverteilung dient der Polydispersitäts-Index P.I., der durch die folgende Formel definiert ist:

$$P.I. = (D_{90} - D_{10})/D_{50}$$

In dieser Formel bedeuten $D_{90}$, $D_{50}$ und $D_{10}$ die Teilchendurchmesser, bei denen das Integral der Verteilungsfunktion dG = f(D)*dD, worin G die Polymermasse, D der Teilchendurchmesser ist, die Werte 0,9 (= 90 Gew.-%), 0,5 (= 50 Gew.-%) bzw. 0,1 (= 10 Gew.-%) der Gesamtmasse der Polymersubstanz erreicht.

Die Figur veranschaulicht diesen Zusammenhang. Sie zeigt in einem Koordinatensystem, auf dessen Abszisse die Teilchengrößen (D) und auf dessen Ordinate die Massenanteile (G) der jTeilchen gegebener Größe aufgetragen sind, gestrichelt die Kurve der Verteilungsfunktion der Teilchengrößen einer Polymerdispersion.

Ferner zeigt sie im gleichen Koordinatensystem die ausgezogene Kurve des Integrals der Verteilungsfunktion, auf der die Punkte für 10, 50 und 90 % Massenanteil sowie die dazugehörigen Punkte $D_{10}$, $D_{50}$ und $D_{90}$ der Teilchendurchmesser durch Kreuze markiert sind.

Mit enger werdender Teilchengrößenverteilung nähert sich der Wert des P.I. dem Wert Null, je breiter d.h. polydisperser die Teilchengrößenverteilung ist, desto größer wird der P.I.

Die Teilchengrößenverteilung kann in an sich bekannter Weise, z.B. mit Hilfe einer analytischen Ultrazentrifuge, (siehe z.B. W.Mächtle, Makromol.Chem. 185 (1984), S. 1025-1039) bestimmt, und aus den erhaltenen Werten der P.I.-Wert berechnet werden.

Alternativ können die Teilchengrößen auch mit einem die Lichtstreuung der Dispersionen ausnutzenden kommerziellen Gerät, z.B. dem "Autosizer 2C" der Fa. MALVERN, England, bestimmt werden. Die nach den beiden Methoden erhaltenen Werte für die Polydispersitäts-Kennzahlen sind zwar nicht direkt miteinander vergleichbar, eignen sich aber beide zur Charakterisierung der Partikelverteilung von Polymerdispersionen. Für die vorliegende Erfindung besonders geeignete Kempartikel weisen P.I.- Werte unterhalb 0,4, vorzugsweise unterhalb 0,3 insbesondere unterhalb 0,2 auf.

Die Materialien von Kern und Schale können, sofern sie den oben angegebenen Bedingungen genügen, anorganischen, organischen oder auch metallischen Charakter haben oder es können Hybridmaterialien sein.

Im Hinblick auf die Möglichkeit, die erfindungsrelevanten Eigenschaften der Kerne der erfindungsgemäßen Kern/Schale-Partikel nach Bedarf zu variieren ist es jedoch zweckmäßig, dass die Kerne ein oder mehrere Polymere und/oder Copolymere (Kern-Polymere) enthalten oder dass sie aus solchen Polymeren bestehen.

Vorzugsweise enthalten die Kerne ein einziges Polymer oder Copolymer. Aus dem gleichen Grund ist es zweckmäßig, daß auch die Schale der erfindungsgemäßen Kern/Schale-Partikel ein oder mehrere Polymere und/oder Copolymere (Schale-Polymere; Matrix-Polymere) oder Polymer-Vorprodukte und gegebenenfalls Hilfs- und Zusatzstoffe enthält, wobei die Zusammensetzung der Schale so gewählt werden kann, daß sie in nichtquellender Umgebung bei Raumtemperatur im wesentlichen formbeständig und klebfrei ist.

Sofern das Schalenmaterial Hilfs- und/oder Zusatzstoffe enthält, beträgt ihr Anteil am Schalegewicht bis zu 40 Gew.-%, vorzugsweise bis zu 20 Gew.-%, insbesondere 5 bis 20 Gew.-%.

Vorzugsweise bestehen Kern und Schale der erfindungsgemäßen Partikel aus den oben angegebenen Bestandteilen in den angegebenen Mengenanteilen.

Die Summe der für einzelne Komponenten einem Bezugssystem (z.B. "Kemmaterial" oder "Schalenmaterial") angegebenen Prozentanteile beträgt selbstverständlich für jede individuelle Bezugsmischung 100 %.

Mit der Verwendung von Polymersubstanzen als Kern-und Schalenmaterial gewinnt der Fachmann die Freiheit deren relevante Eigenschaften, wie z.B. ihre Zusammensetzung, die Teilchengröße, die mechanischen Daten, den Brechungsindex, die Glasübergangstemperatur, den Schmelzpunkt und das Gewichtsverhältnis von Kern:Schale und

damit auch die anwendungstechnischen Eigenschaften der Kern/Schalepartikel festzulegen, die sich letztlich auch auf die Eigenschaften der daraus hergestellten Effektfarbmittel auswirken.

Polymere und/oder Copolymere, die in dem Kernmaterial enthalten sind oder aus denen es besteht, sind hochmolekulare Verbindungen, die der oben für das Kernmaterial gegebenen Spezifikation entsprechen. Geeignet sind sowohl Polymerisate und Copolymerisate polymerisierbarer ungesättigten Monomerer als auch Polykondensate und Copolykondensate von Monomeren mit mindestens zwei reaktiven Gruppen, wie z.B. hochmolekulare aliphatische, aliphatisch/aromatische oder vollaromatische Polyester, Polyamide, Polycarbonate, Polyharnstoffe und Polyurethane, aber auch Aminoplast- und Phenoplast-Harze, wie z.B. Melamin/Formaldehyd-, Harnstoff/Formaldehyd und Phenol/Formaldehyd-Kondensate.

Zweckmäßigerweise sind die Polymeren des Kernmaterials vernetzte (Co-)Polymere, da diese am besten der Forderung nach geringer Quellbarkeit gerecht werden. Außerdem begünstigen sie die Ausbildung von Kern/Schale-Strukturen bei der Herstellung der erfindungsgemäßen Kern/Schale-Partikel. Diese vernetzten Polymeren können entweder bereits im Verlauf der Polymerisation bzw. Polykondensation oder Copolymerisation bzw. Copolykondensation vernetzt worden sein oder sie können nach Abschluß der eigentlichen (Co-)Polymerisation bzw. (Co-)Polykondensation in einem gesonderten Verfahrensschritt nachvernetzt worden sein.

Eine detaillierte Beschreibung der chemischen Zusammensetzung geeigneter Poymerer folgt weiter unten.

Um den erfindungsgemäßen Kern/Schale-Partikeln ein möglichst breites Anwendungsspektrum zu vermitteln ist es zweckmäßig, wenn auch das Schalenmaterial ein oder mehreren Polymeren und/oder Copolymeren enthält oder daraus besteht. Insbesondere aus wirtschaftlichen Gründen ist es vorteilhaft, wenn das Schalenmaterial ein Polymer enthält oder daraus besteht.

Für das Schalenmaterial eigenen sich, wie für das Kernmaterial, im Prinzip Polymere der oben bereits genannten Klassen, sofern sie so ausgewählt bzw. aufgebaut werden, daß sie der oben für die Schalepolymeren gegebenen Spezifikation entsprechen.

Das bedeutet, daß sie einen von den Kernpolymeren deutlich abweichenden Brechungsindex haben müssen, d.h. daß bei Einsatz hochbrechender Kernpolymere niedrig brechende Schalepolymere eingesetzt werden müssen und umgekehrt. Ferner sollen sie nicht dazu tendieren, die Kerne anzuquellen oder aufzulösen.

Eine weitere Forderung an die Schalepolymeren besteht darin, daß sie sich entweder durch unzersetztes Schmelzen - gegebenenfalls unter Mitwirkung von in der Schale enthaltenen oder den Kern/Schale-Partikel-Pulvern vor der Verwendung gesondert zugesetzten Hilfs- und/oder Zusatzstoffen durch einfache Maßnahmen erweichen oder verflüssigen lassen oder daß sie sich aus Polymer-Vorstufen (Präpolymeren, Monomeren), die Bestandteile eines erweichbaren oder verflüssigbaren Schalenmaterials sind, erzeugen lassen. Dabei muß, wie oben bereits dargelegt, die Erweichung oder Verflüssigung so weit gehen, daß die Kerne der Kern/Schale-Partikel zumindest Domänen regelmäßiger Anordnung ausbilden können.

Präpolymere im Sinne dieser Erfindung sind Polymere niederen oder mittleren Polymerisationsgrades, die durch Weiterkondensation oder Vernetzung in die gewünschten Polymeren überführt werden können.

Allerdings ist es für viele Anwendungen der erfindungsgemäßen Pulver, insbesondere für die Herstellung von Effektfarbmitteln oder schützenden Überzügen, zweckmäßig und erwünscht, wenn auch die Schale ein Polymermaterial enthält oder daraus besteht, das nach der Ausbildung der kontinuierlichen oder der die Kerne punktförmig verbindenden Matrix, d.h. nach der "Filmbildung", eine geringe Löslichkeit bzw. Anquellbarkeit in organischen Lösungsmitteln und/oder Wasser aufweist. Für besonders wertvolle Anwendungen der erfindungsgemäßen Pulver, z.B. für die Herstellung von hochstabilen Pigmenten oder von dekorativen und/oder schützenden Beschichtungen, ist es daher bevorzugt, auch die Polymeren der Schale zu vernetzen.

Diese Vernetzung kann über die gleichen polyfunktionellen Monomeren erfolgen wie bei den Kernpolymeren unter Berücksichtigung der erforderlichen Brechungsunterschiede.

Die Vernetzersubstanzen - eine detaillierte Beschreibung folgt weiter unten - können Bestandteil des Schalenmaterials sein, sie können dem Kern/Schale-Partikel-Pulver vor seiner Verwendung, d.h. vor der Verfilmung, gesondert zugesetzt werden, oder sie können nachträglich, im Anschluß an die Verfilmung appliziert werden (Nachvernetzung).

Günstig für gewisse Anwendungen, wie z.B. zur Herstellung von Beschichtungen oder Farbfolien ist es, wenn das Polymermaterial der die Matrixphase bildenden Schale der erfindungsgemäßen Kern/Schale-Partikel ein elastisch deformierbares Polymer ist, z.B. ein Polymerisat mit niedriger Glasübergangstemperatur.

In diesem Fall kann man es erreichen, daß die Farbe einer Schicht des erfindungsgemäßen Farbmittels bei Dehnung und Stauchung variiert. Interessant für die Anwendung sind auch solche erfindungsgemäßen Kern/Schale-Partikel, die bei der Verfilmung zu Effektfarbmitteln führen, die einen Dichroismus zeigen.

Polymere, die den Spezifikationen für ein Matrixmaterial genügen, finden sich ebenfalls in den Gruppen der Polymerisate und Copolymerisate polymerisierbarer ungesättigter Monomerer als auch der Polykondensate und Copolykondensate von Monomeren mit mindestens zwei reaktiven Gruppen, wie z.B. der hochmolekularen aliphatischen, aliphatisch/aromatischen oder vollaromatischen Polyester und Polyamide, aber auch der Aminoplast- und Phenoplast-Harze, wie z.B. der Melamin/Formaldehyd-, Harnstoff/Formaldehyd und Phenol/Formaldehyd-Kondensate, die unter

starker Vernetzung beim Trocknen weiter kondensieren. Analoges gilt für Epoxidharze, bestehend beispielsweise aus Mischungen von Polyepoxiden und Polyaminen oder Polyolen, die sich beim Trocknen zu harzartigen Massen verfestigen.

Zur Herstellung von Epoxidharzen werden üblicherweise Epoxid-Präpolymerisate, die beispielsweise durch Reaktion von Bisphenol A oder anderen Bisphenolen, Resorcin, Hydrochinon, Hexandiol oder anderen aromatischen oder aliphatischen Di- oder Polyolen oder Phenol-Formaldehyd-Kondensaten oder deren Mischungen untereinander mit Epichlorhydrin, Dicyclopentadien-diepoxid oder anderen Di- oder Polyepoxiden erhalten werden, mit weiteren zur Kondensation befähigten Verbindungen direkt oder in Lösung vermischt und aushärten gelassen.

Unter Berücksichtigung der obigen Bedingungen für die Eigenschaften der Schalepolymeren (= Matrixpolymeren) sind für ihre Herstellung im Prinzip ausgewählte Bausteine aus allen Gruppen organischer Filmbildner geeignet.

Schalepolymere, die in organischen Lösemitteln löslich oder zumindest gut quellbar sind, und die daher mit Vorteil als Filmbildner für durch Auftrocknen bindende Matrices eingesetzt werden, sind beispielsweise modifizierte oder nicht zu hochmolekulare Polyester, Zelluloseester wie Zellulose-acetobutyrat, Polyurethane, Silikone, polyether- oder polyestermodifizierte Silikone.

Einige weitere Beispiele mögen die breite Palette der für die Herstellung der Schale geeigneten Polymeren veranschaulichen.

Fall 1: Soll das Kernmaterial hochbrechend sein, die Matrix niedrig brechend, so eignen sich für die Schale beispielsweise UF-Harze, trocknende und verfilmende Polymerdispersionen, Polymerisate wie Polyethylen, Polypropylen, Polyethylenoxid, Polyacrylate, Polymethacrylate, Polybutadien, Polymethylmethacrylat, Polytetrafluorethylen, Polyoxymethylen, Polyester, Polyamide, Polyepoxide, Polyurethan, Kautschuk, Polyacrylnitril und Polyisopren.

Fall 2: Soll das Kernmaterial niedrig brechend sein, die Matrix hochbrechend, so eignen sich für die Schale beispielsweise Polymerisate mit vorzugsweise aromatischer Grundstruktur wie Polystyrol, Polystyrol-Copolymerisate wie z.B. SAN, aromatisch-aliphatische Polyester und Polyamide, aromatische Polysulfone und Polyketone, PF- und MF-Harze, Polyvinylchlorid, Polyvinylidenchlorid sowie bei geeigneter Auswahl eines hochbrechenden Kernmaterials auch Polyacrylnitril oder Polyurethan.

Wie oben bereits dargelegt, können die erfindungsgemäßen Kern/Schale-Partikel, wenn es technisch vorteilhaft ist, im Schalenmaterial Hilfs- und Zusatzstoffe enthalten. Sie dienen der optimalen Einstellung der für die Anwendung und Verarbeitung gewünschten bzw. erforderlichen anwendungstechnischen Daten, bzw. Eigenschaften. Beispiele für derartige Hilfs- und/oder Zusatzstoffe sind Weichmacher, Filmbildungshilfsmittel, Verlaufmittel, Füllmittel, Schmelzhilfsmittel, Haftmittel, Trennmittel, Auftragshilfsmittel, Mittel zur Viskositätsmodifizierung, z.B. Verdicker.

Besonders empfehlenswert sind Zusätze von Filmbildungshilfsmitteln und Filmmodifizierungsmitteln auf der Basis von Verbindungen der allgemeinen Formel $HO-C_nH_{2n}-O-(C_nH_{2n}-O)_mH$, worin n eine Zahl von 2 bis 4, vorzugsweise 2 oder 3, und m eine Zahl von 0 bis 500 ist. Die Zahl n kann innerhalb der Kette variieren und die verschiedenen Kettenglieder können in statistischer oder in blockweiser Verteilung eingebaut sein. Beispiele für derartige Hilfsmittel sind Ethylenglycol, Propylenglycol, Di-, Tri- und Tetraethylenglycol, Di-, Tri- und Tetrapropylenglycol, Polyethylenoxide, Polypropylenoxid und Ethylenoxid/Propylenoxid-Mischpolymere mit Molgewichten bis ca. 15000 und statistischer oder blockartigen Verteilung der Ethylenoxid und Propylenoxid-Baugruppen.

Auch gegebenenfalls organische oder anorganische Lösungs-, Dispergier- oder Verdünnungsmittel, die beispielsweise die offene Zeit der Formulierung, d.h. die für ihren Auftrag auf Substrate zur Verfügung stehende Zeit, verlängern, Wachse oder Schmelzkleber sind als Additive möglich.

Gewünschtenfalls können den Polymerisaten, insbesondere dem Schalenmaterial, auch Stabilisatoren gegen UV-Strahlung und Wettereinflüsse zugesetzt werden. Hierzu eignen sich z.B. Derivate des 2,4-Dihydroxybenzophenons, Derivate des 2-Cyan-3,3'-diphenylacrylats, Derivate des 2,2',4,4'-Tetrahydroxybenzophenons, Derivate des o-Hydroxyphenyl-benztriazols, Salicylsäureester, o-Hydroxyphenyl-s-triazine oder sterisch gehinderte Amine. Auch diese Stoffe können einzeln oder als Gemische eingesetzt werden.

Die Gesamtmenge der zur Einstellung optimaler Eigenschaften gegebenenfalls einzusetzenden Hilfs- und/ oder Zusatzstoffe kann, muß aber nicht, Bestandteil des Schalenmaterials der Kern/Schale-Partikel sein. Vielmehr können die Hilfs- und/oder Zusatzstoffe auch ganz oder teilweise den Kern/Schale-Partikel-Pulvern gesondert, z.B. nachträglich, zugesetzt werden. Dieser Zusatz kann entweder unmittelbar vor der Verwendung beim Verarbeiter der erfindungsgemäßen Kern/Schale-Partikel, oder bereits beim Hersteller erfolgen, so daß dem Verarbeiter ohne weiteres verarbeitbare Zubereitungen der erfindungsgemäßen Kern/Schale-Partikel geliefert werden.

Die Gesamtmenge der Hilfs- und/oder Zusatzstoffe beträgt bis zu 40 Gew.-%, vorzugsweise 1 bis 30 Gew.-%, insbesondere 5 bis 20 Gew.-% des Gewichts der Zubereitung.

Diese Zubereitungen sind ebenfalls ein Gegenstand dieser Erfindung. Sie können auch zusätzliche Monomere oder Präpolymere enthalten, die nach Art und Mengenanteil so ausgewählt werden, daß sie durch (Co-)Polymerisation in die oben beschriebenen Matrixpolymeren überführt werden können. Gewünschtenfalls können die Zubereitungen auch zusätzliche fertige, gegebenenfalls sogar vemetzte, Matrixpolymere enthalten. Diese Zusätze können bei der Verfilmung der Schale der Kern/Schale-Partikel zusätzliche Matrixmasse beisteuern.

Das Matrixpolymer, gegebenenfalls in der Mischung mit Hilfs- und/oder Zusatzstoffen, kann unter den Bedingungen der Verfilmung auf dem Substrat soweit verformt werden, z.B. durch Verflüssigung, Erweichung oder viscoelastische Plastifizierung, daß die Ausbildung von Domänen regelmäßiger Anordnung von Kempartikeln nicht behindert wird und daß sich eine zusammenhängende Matrix oder ein System von Fixierungspunkten zwischen den Kempartikeln ausbildet.

Enthält eine Zubereitung auch vernetzend wirkende Substanzen oder funktionelle Gruppen, so können diese durch besondere Maßnahmen, z.B. thermisch durch Erwärmung, photochemisch durch Bestrahlung mit aktinischer, vorzugsweise elektromagnetischer, Strahlung, durch Zusatz radikalischer oder kationischer Initiatoren oder - bei Vernetzern, die über eine Kondensations- oder Additionsreaktion wirken - mittels Reaktionsbeschleunigem aktiviert werden.

Die erfindungsgemäßen Zubereitungen können, je nach der Art und der Menge der in ihnen enthaltenen Hilfs- und/oder Zusatzstoffe, bei Raumtemperatur fest oder flüssig sein, wobei die flüssigen, wie unten näher ausgeführt, bevorzugt sind.

Feste Zubereitungen umfassen 70 bis 99 Gew.-%, vorzugsweise 80 bis 95 Gew.-%, erfindungsgemäße Kern/Schale-Partikel und 30 bis 1 Gew.-%, vorzugsweise 20 bis 5 Gew.-%, eines bei Normaltemperatur festen Substanzgemisches aus Hilfsmitteln und/oder Zusatzstoffen.

Bedingt durch die beim Verarbeiter der erfindungsgemäßen Kern/Schale-Partikel vorhandenen Auftragseinrichtungen können bei Raumtemperatur oder bei der Auftragstemperatur feste oder aber flüssige oder pastöse, streich-, spritz- und/oder gießfähige Zubereitungen bevorzugt werden. Letztere haben den Vorzug, daß sie mit einfachen Hilfsmitteln gleichmäßig auf Substrate aufgetragen werden können.

Flüssige oder pastöse Zubereitungen der erfindungsgemäßen Kern/Schale-Partikel können formuliert werden, indem man oben beschriebenen Zubereitungen, soweit sie bei Raum- bzw. Auftragstemperatur fest sind, flüssige oder niedrig schmelzende, inerte, organische oder anorganische, Lösungs-, Verdünnungs- oder Dispergiermittel, zusetzt, vorzugsweise solche, die auch für die Formulierung von Anstrichstoffen angewendet werden. Beispiele für solche verflüssigenden Zusätze sind Alkane mittlerer Kettenlänge, niedrig siedende aromatische Kohlenwasserstoffe, niedere Alkohole, Ester niederer Carbonsäuren mit niederen Alkanolen, Wasser oder Mischungen derartiger Substanzen.

Auch solche, zusätzlich Lösungs-, Verdünnungs- oder Dispergiermittel enthaltende flüssige oder pastöse Zubereitungen der erfindungsgemäßen Kern/Schale-Partikel sind ein Gegenstand der vorliegenden Erfindung.

Die gegebenenfalls erst bei erhöhter Temperatur flüssige Phase dieser Zubereitungen kann auch noch weitere Hilfs- und Zusatzstoffe enthalten, wie z.B. Verdicker, Dispersionsstabilisatoren, Verlaufsmittel und andere anwendungstechnisch erforderliche oder erwünschte Hilfsstoffe.

Die erfindungsgemäßen flüssigen oder pastösen Zubereitungen der erfindungsgemäßen Kern/Schale-Partikel umfassen 5 bis 75 Gew.-%, vorzugsweise 10 bis 65 Gew.-%, insbesondere 20 bis 50 Gew.-% eines Kern/Schale-Partikel des Anspruchs 1 und 95 bis 25 Gew.-%, vorzugsweise 90 bis 35 Gew.-%, insbesondere 80 bis 50 Gew.-% eines bei Normaltemperatur oder erst bei erhöhter Temperatur flüssigen Substanzgemisches aus Lösungs-, Dispergier- oder Hilfsmitteln und/oder Zusatzstoffen. Ein bevorzugtes Dispergiermittel ist Wasser.

Ein weiterer Gegenstand der vorliegenden Erfindung ist ein Verfahren zur Herstellung der oben beschriebenen, erfindungsgemäßen Kern/Schale-Partikel. Bei diesem Verfahren werden Partikel aus Kernpolymeren mit Monomeren oder Präpolymeren der Schalepolymeren in einem inerten, flüssigen Reaktionsmedium, vorzugsweise in Gegenwart von Schutzkolloiden und/oder Emulgatoren, homogenisiert und die Polymer-Vorstufen an- oder auspolymerisiert. Dabei werden die Polymerisationsbedingungen so eingestellt, dass die den Schalepolymere oder - Polymervorprodukte sich auf den Kernpartikeln abscheiden. Das Verfahren ist durch die Merkmale der unabhängigen Ansprüche 11 und 12 gekennzeichnet.

Das flüssige Reaktionsmedium, in dem die Polymerisation oder Copolymerisation ausgeführt wird, besteht aus den bei Polymerisationen, insbesondere bei Verfahren der Emulsionspolymerisation, eingesetzten Lösungs-, Dispergier- oder Verdünnungsmitteln. Hierbei wird die Auswahl so getroffen, dass die zur Homogenisierung der Kernpartikel und Schale-Vorprodukte eingesetzten Emulgatoren eine ausreichende Wirksamkeit entfalten können und dass in dem Reaktionsmedium ausreichende Unterschiede von Solvatation und Löslichkeit zwischen den Schalepolymeren und ihren Vorprodukten bestehen. Günstig als flüssiges Reaktionsmedium zur Durchführung des erfindungsgemäßen Verfahrens sind wässrige Medien, insbesondere Wasser.

Bei der Durchführung des erfindungsgemäßen Verfahrens ist darauf zu achten, daß die Monomeren und Präpolymeren, die bei der Polymerisation die Schale bilden sollen, keine separaten Polymerpartikel ausbilden, sondern bevorzugt sich tatsächlich als Schale auf den Kempartikeln abscheiden. Die Auswahl des Reaktionsmediums und der Reaktanten und Zusätze beeinflußt die Abscheidung der Schalepolymeren auf den Kernpartikeln. Günstig für die Schalebildung ist es, wenn die Löslichkeiten der Polymeren im Reaktionsmedium deutlich geringer ist als die der Vorprodukte, wenn die Solvatationsneigung - im wäßrigen Reaktionsmedium die Hydrophilie - der Vorprodukte der Schalepolymeren größer als oder wenigstens etwa gleich ist wie die der Kernpolymer-Vorprodukte. Eine hohe Konzentration der Kernpartikel und eine ausreichende Menge des Emulgators begünstigen die Schalebildung. Die Temperatur und Art und Menge des Initiators können die Schalebildung ebenfalls beeinflussen. Weiterhin ist es günstig, die Beweglichkeit der

Polymerketten des Kernmaterials niedrig zu halten, um die Interdiffusion der Polymermaterialien und Vorprodukte nach Möglichkeit zu unterdrücken. Besonders vorteilhaft ist es daher, die Kernpolymeren zu vernetzen.

Weiterhin ist es besonders vorteilhaft und zweckmäßig, die für die Schalebildung vorgesehenen Monomeren oder Präpolymeren dem Polymerisationsansatz möglichst langsam zuzusetzen, so daß ihre Konzentration im Reaktionsgemisch zu jeder Zeit möglichst niedrig liegt (sogenannte "starved feed"- Bedingungen).

Sollen bei dem erfindungsgemäßen Verfahren Kern/Schale-Partikel erzeugt werden, deren Schale weitgehend frei ist von niedermolekularen Substanzen, so werden dem Polymerisationsansatz außer den für den Ablauf der Polymerisationsreaktion und für die gleichmäßige Ausbildung des Partikelmantels unbedingt erforderlichen Substanzen keine weiteren Hilfs- und Zusatzstoffe zugefügt.

Die Polymerisation kann bis zur vollständigen Polymerisation aller polymerisierbarer Bestandteile geführt werden, oder sie kann vorher abgebrochen werden, wenn man Kern/Schale-Partikel herstellen will, die in der Schale noch Präpolymere enthalten. Vorzugsweise werden die Polymer-Vorstufen des Schalepolymers vollständig auspolymerisiert.

Die erhaltenen Kern/Schale-Partikel können in an sich bekannten Weise, isoliert werden, beispielsweise durch Entfernen des flüssigen Reaktionsmediums. Die so hergestellten Kern/Schalepartikel bilden in der Regel Aggregate, im Falle der Sprühtrocknung mikroskopische Partikel mit hoher Kugelsymmetrie, auf deren Oberfläche sich eine überraschend regelmäßige, kristallgitterartige Anordnung der erfindungsgemäßen Kern/Schale-Partikel zeigt.

Die nach Abschluß oder Abbruch der Polymerisationsreaktion erhaltenen Reaktionsgemische können auch unmittelbar, d.h. ohne Isolierung der Kern/Schale-Partikel, weiterverarbeitet werden. Sie stellen dann Zubereitungen dar, die als Hilfs- und/oder Zusatzstoffe lediglich die eingesetzten Emulgatoren und das flüssige Reaktionsmedium enthalten. Gewünschtenfalls ist auch eine teilweise Entfernung des Reaktionsmediums möglich, wodurch der Gehalt der Zubereitung an Kern/Schale-Partikeln nach Bedarf erhöht werden kann.

Die bei dem oben beschriebenen Verfahren zur Herstellung der erfindungsgemäßen Kern/Schale-Partikel vorzulegenden Kempolymer-Partikel können in einem separaten Polymerisationsprozess vorgefertigt worden sein.

Besonders ökonomisch ist es allerdings, das Verfahren in einem Zweistufen-Eintopf-Prozess ausgeführt wird, wobei in dem ersten Reaktionsschritt aus den ausgewählten Polymer-Vorstufen (Monomeren und/oder Präpolymeren) die Kernpolymer-Partikel hergestellt werden und anschließend, ohne Isolierung der Kernpartikel, dem Ansatz die für die Schalebildung erforderlichen Polymer-Vorprodukte und gegebenenfalls Hilfs- und Zusatzstoffe zugefügt werden und dann wie oben beschrieben weitergearbeitet wird.

Durch Abtrennung des flüssigen Reaktionsmediums können die Hilfs- und/oder Zusatzstoffe enthaltenden Kern/Schale-Partikel oder Zubereitungen isoliert werden. Je nach der Art und der Menge der zugesetzten Hilfs-und/ oder Zusatzstoffe werden auf diese Weise feste, pastöse oder flüssige Zubereitungen erhalten.

Zur gezielten Herstellung fester Zubereitungen wird die Polymerisation der Schalepolymeren in Gegenwart aller oder eines Teils der in der Zubereitung enthaltenen Hilfs- und/oder Zusatzstoffe und gegebenenfalls Dispergier- oder Verdünnungsmittel ausgeführt wird, oder daß diese ganz oder teilweise während oder nach Abschluß der Polymerisation zugefügt werden, wobei die Zusätze so gewählt werden, daß ihre Mischung fest ist, und daß nach Abschluß der Polymerisation das inerte Reaktionsmedium entfernt wird.

Sollen flüssige oder pastöse Zubereitungen hergestellt werden, so kann man entweder die Abtrennung des flüssigen Reaktionsmediums ganz oder teilweise unterlassen oder man kann, falls bei dessen Abtrennung eine feste Zubereitung entsteht, nachträglich wieder ein wunschgemäßes Lösungs-, Dispergier- oder Verdünnungsmittel in der erforderlichen Menge zusetzen.

Generell erfolgt die Herstellung der pastösen oder fluiden Zubereitungen der erfindungsgemäßen Kern/Schale-Partikel, indem die Polymerisation der Schalepolymeren in Gegenwart aller oder eines Teils der in der Zubereitung enthaltenen Hilfs- und/oder Zusatzstoffe und gegebenenfalls Dispergier- oder Verdünnungsmittel ausgeführt wird, oder daß diese ganz oder teilweise während oder nach Abschluß der Polymerisation zugefügt werden, wobei die Zusätze so gewählt werden, daß ihre Mischung eine fluide oder pastöse Konsistenz hat, und daß nach Abschluß der Polymerisation gegebenenfalls das inerte Reaktionsmedium ganz oder teilweise entfernt wird.

Ein ökonomisch besonders günstiger Sonderfall bei der Herstellung fluider oder pastöser Zubereitungen liegt dann vor, wenn das inerte flüssige Reaktionsmedium gleichzeitig als Dispergier- und Verdünnungsmittel in der fluiden oder pastösen Zubereitung dient und nach Abschluß der Polymerisation zumindest nicht vollständig entfernt wird. Selbstverständlich können auch die erfindungsgemäßen festen Zubereitungen der erfindungsgemäßen Kern/Schale-Partikel durch Zusatz von Lösungs-, Verdünnungs- oder Dispergiermitteln in die fluiden oder pastösen Zubereitungen überführt werden.

Bei der Herstellung der erfindungsgemäßen Kern/Schale-Partikel und ihren Zubereitungen wird das inerte Reaktionsmedium vorzugsweise durch Gefriertrocknung oder durch Sprühtrocknung, oder im Falle von bereits applizierten Zubereitungen durch Vakuumverdampfung entfernt.

Für die Ausführung der Erfindung sind für den Kern und die Schale Materialien, vorzugsweise Polymermaterialien, erforderlich, die sich bezüglich ihres Brechungsindex deutlich unterscheiden, die folglich gezielt entweder auf einen relativ hohen oder auf einen relativ niedrigen Brechungsindex eingestellt worden sind.

Darüberhinaus sind die oben bezeichneten Anforderungen an chemische Beständigkeit und physikalisches Verhalten zu stellen: Keine oder möglichst geringe gegenseitige Penetration von Kern- und Schalenmaterial (d.h. keine oder möglichst geringe Quellung) keine chemischen Reaktionen mit den Inhaltsstoffen der erfindungsgemäßen Farbmittel und Umgebungsbestandteilen wie z.B. Auflösung oder Hydrolyse. Die Schalenpolymeren müssen zur Anwendung der erfindungsgemäßen Kern/Schale-Partikel verfilmbar, sollen aber nach der Matrixbildung möglichst inert sein. Solche Polymere können in an sich bekannter Weise durch Polymerisation, Polykondensation oder Polyaddition polymerisierbarer und/oder copolymerisierbarer bzw. (co-)kondensierbarer oder zu Polyadditionsreaktionen fähiger Monomerer oder durch Höherpolymerisation bzw. Nachkondensation oder Vernetzung von Polymeren oder Oligomeren Verbindungen hergestellt werden.

Die Herstellung der Polymerisate für den Kern und die Schale ist nicht auf ein bestimmtes Verfahren beschränkt. Es können vielmehr alle bekannten Verfahren zur Polymerherstellung herangezogen werden. Vorzugsweise setzt man die Verfahren der Emulsionspolymerisation, der Suspensionspolymerisation, der Microemulsionspolymerisation, oder der Microsuspensionspolymerisation ein, die sich der radikalischen Polymerisation bedienen. Sie bieten den Vorteil, nicht empfindlich gegen Feuchtigkeit zu sein.

Zur Auslösung der Polymerisation eigenen sich Polymerisationsinitiatoren, die entweder thermisch oder photochemisch zerfallen, Radikale bilden, und so die Polymerisation auslösen. Dabei sind unter den thermisch aktivierbaren Polymerisationsinitiatoren solche bevorzugt, die zwischen 20 und 180°C, insbesondere zwischen 50 und 80°C zerfallen.

Besonders bevorzugte Polymerisationsinitiatoren sind Peroxide wie Dibenzoylperoxid Di-tert.-Butylperoxid, Perester, Percarbonate, Perketale, Hydroperoxide, aber auch anorganische Peroxide wie $H_2O_2$, Salze der Peroxoschwefelsäure und Peroxo-dischwefelsäure Azoverbindungen, Boralkylverbindungen sowie homolytisch zerfallende Kohlenwasserstoffe.

Die Initiatoren und/oder Photoinitiatoren, die je nach den Anforderungen an das polymerisierte Material in Mengen zwischen 0,01 und 15 Gew.-%, bezogen auf die polymerisierbaren Komponenten eingesetzt werden, können einzeln oder, zur Ausnutzung vorteilhafter synergistischer Effekte, in Kombination miteinander angewendet werden.

Auch für die Herstellung von Polykondensationsprodukten sind entsprechende Verfahren beschrieben worden. So ist es möglich, die Ausgangsmaterialien für die Herstellung von Polykondensationsprodukten in inerten Flüssigkeiten zu dispergieren und, vorzugsweise unter Auskreisen niedermolekularer Reaktionsprodukte wie Wasser oder - z.B. bei Einsatz von Dicarbonsäure-di-niederalkylestern zur Herstellung von Polyestern oder Polyamiden - niederen Alkanolen, zu kondensieren.

Polyadditionsprodukte werden analog durch Umsetzung durch Verbindungen erhalten, die mindestens zwei, vorzugsweise drei reaktive Gruppen wie z.B. Epoxid-, Cyanat-, Isocyanat-, oder Isothiocyanatgruppen aufweisen, mit Verbindungen, die komplementäre reaktive Gruppen tragen. So reagieren Isocyanate beispielsweise mit Alkoholen zu Urethanen, mit Aminen zu Harnstoffderivaten, während Epoxide mit diesen Komplementären zu Hydroxyethern bzw. Hydroxyaminen reagieren. Wie die Polykondensationen können auch Polyadditionsreaktionen vorteilhaft in einem inerten Lösungs- oder Dispergiermittel ausgeführt werden.

Es ist auch möglich, aromatische, aliphatische oder gemischte aromatisch-aliphatische Polymere, z.B. Polyester, Polyurethane, Polyamide, Polyharnstoffe, Polyepoxide oder auch Lösungspolymerisate, in einem Dispergiermittel wie z.B. in Wasser, Alkoholen, Tetrahydrofuran, Kohlenwasserstoffen zu dispergieren oder zu emulgieren (Sekundärdispersion) und in dieser feinen Verteilung nachzukondensieren, zu vernetzen und auszuhärten.

Zur Herstellung der für diese Polymerisations-Polykondensations- oder Polyadditionsverfahren benötigten stabilen Dispersionen werden in der Regel Dispergierhilfsmittel eingesetzt.

Als Dispergierhilfsmittel werden vorzugsweise wasserlösliche hochmolekulare organische Verbindungen mit polaren Gruppen, wie Polyvinylpyrrolidon, Copolymerisate aus Vinylpropionat oder -acetat und Vinypyrrolidon, teilverseifte Copolymerisate aus einem Acrylester und Acrylnitril, Polyvinylalkohole mit unterschiedlichem Restacetat-Gehalt, Zelluloseether, Gelatine, Blockcopolymere, modifizierte Stärke, niedermolekulare, carbon- und/oder sulfonsäuregruppenhaltigen Polymerisate oder Mischungen dieser Stoffe verwendet.

Besonders bevorzugte Schutzkolloide sind Polyvinylalkohole mit einem Restacetat-Gehalt von unter 35, insbesondere 5 bis 39 Mol.-% und/oder Vinylpyrrolidon/Vinylpropionat-Copolymere mit einem Vinylestergehalt von unter 35, insbesondere 5 bis 30 Gew.-%.

Es können nichtionische oder auch ionische Emulgatoren, gegebenenfalls auch als Mischung, verwendet werden. Bevorzugte Emulgatoren sind gegebenenfalls ethoxylierte oder propoxylierte längerkettige Alkanole oder Alkylphenole mit unterschiedlichen Ethoxylierungs- bzw. Propoxylierungsgraden (z.B. Addukte mit 0 bis 50 mol Alkylenoxid) bzw. deren neutralisierte, sulfatierte, sulfonierte oder phosphatierte Derivate. Auch neutralisierte Dialkylsulfobernsteinsäureester oder Alkyldiphenyloxid-disulfonate sind besonders gut geeignet.

Besonders vorteilhaft sind Kombinationen dieser Emulgatoren mit den oben genannten Schutzkolloiden, da mit ihnen besonders feinteilige Dispersionen erhalten werden.

Auch Verfahren zur Herstellung monodisperser Polymerteilchen sind in der Literatur (z.B. R.C.Backus, R.C.Williams, J.Appl. Physics *19*, S.1186, (1948)) bereits beschrieben worden und können mit Vorteil insbesondere zur Herstellung der Kernpolymeren eingesetzt werden. Hierbei ist lediglich darauf zu achten, dass die oben angegebenen Teilchengrößen von 100 bis 700 nm, vorzugsweise von 150 bis 500 nm, insbesondere von 200 bis 400 nm und ein Polydispersitätsindex von unter 0,6, vorzugsweise von unter 0,4, insbesondere von unter 0,3 resultieren um nach der Orientierung der Kernpartikel ein Gitter zu erhalten, das eine Bragg-Streuung im sichtbaren, nahen UV- oder IR-Bereich ergibt. Anzustreben ist eine möglichst hohe Einheitlichkeit der Polymerisate.

Für die erforderliche Eigenschaftskombination, wie chemische und mechanische Resistenz, physikalische Daten ist ihre Zusammensetzung und ihr Polymerisations- und/oder Vernetzungsgrad maßgebend. Die Resistenz einer Phase gegen Auflösung oder Anquellen in oder durch die andere Phase kann außer durch Vernetzung der Polymeren auch dadurch herbeigeführt werden, dass man die Monomeren für die Polymeren von Kern und Schale so auswählt, daß man "molekular unverträgliche" Polymere erhält, d.h. daß sie - wie z.B. Öl und Wasser - aufgrund unterschiedlicher $\delta_{LP}$-Werte, d.h. unterschiedlicher Polarität, von Natur aus keine Tendenz zeigen, einander zu durchdringen. Die Löslichkeitsparameter $\delta_{LP}$ kennzeichnen die Polarität der betreffenden Verbindungen und sind für viele niedermolekulare Verbindungen und Polymere publiziert worden (Vergl. Brantrup-Immergut, "Polymer-Handbook", 3.Auflage, J.Wiley, New York, Kapitel VII). Je größer der Unterschied der $\delta_{LP}$-Werte Werte zwischen Kern- und Schalenpolymer ist, desto geringer ist die Tendenz zu molekularer Vermischung oder Quellung.

Durch die Einstellung der Reaktionsbedingungen wie Temperatur, Druck, Reaktionsdauer, Einsatz geeigneter Katalysatorsysteme, die in bekannten Weise den Polymerisationsgrad beeinflussen und die Auswahl der zu ihrer Herstellung eingesetzten Monomeren nach Art und Mengenanteil lassen sich gezielt die gewünschten Eigenschaftskombinationen der benötigten Polymeren einstellen.

Auch die Lichtbrechungseigenschaften der Polymeren werden maßgeblich von der Auswahl der zu ihrer Herstellung eingesetzten Monomeren beeinflußt.

Monomere, die zu Polymeren mit hohem Brechungsindex führen, sind in der Regel solche, die entweder aromatische Teilstrukturen aufweisen, oder solche, die über Heteroatome mit hoher Ordnungszahl, wie z.B. Halogenatome, insbesondere Brom- oder Jodatome, Schwefel oder Metallionen, verfügen, d.h. über Atome oder Atomgruppierungen, die die Polarisierbarkeit der Polymeren erhöhen.

Polymere mit niedrigem Brechungsindex werden demgemäß aus Monomeren oder Monomerengemischen erhalten, die die genannten Teilstrukturen und/oder Atome hoher Ordnungszahl nicht oder nur in geringem Anteil enthalten.

Polykondensate, die sich zur Ausführung der vorliegenden Erfindung eignen, sind beispielsweise insbesondere Polyamide, Polyester, Polyurethane, oder Polycarbonate.

Geeignete Polyester bestehen überwiegend, in der Regel zu über 80 Gew.%, aus Bausteinen, die sich von aromatischen Dicarbonsäuren und von aliphatischen und/oder cycloaliphatischen Diolen oder von, vorzugsweise aromatischen Hydroxycarbonsäuren ableiten. Gängige aromatische Dicarbonsäurebausteine sind die zweiwertigen Reste von Benzoldicarbonsäuren, insbesondere der Terephthalsäure und der Isophthalsäure; gängige Diole haben 2-8 C-Atome, wobei das solche mit 2 bis 4 C-Atomen besonders geeignet sind.

Die genannten Polyamide, Polyharnstoffe, Polyurethane und Polyester können zur Einstellung spezieller Eigenschaftskombinationen durch Mitverwendung von drei- oder höherfunktionalisierten Verbindungen vernetzt oder vorvernetzt werden. Die Vernetzung oder die Vervollständigung einer Vorvernetzung kann auch in einem separaten Schritt im Anschluß an die Polykondensation oder Polyaddition, gegebenenfalls unter Zumischen einer weiteren reaktiven Komponente erfolgen.

Die Polykondensate können durch die Wahl geeigneter Reaktionsbedingungen und Kondensationsverfahren in Form von feindispers vorliegenden Polymeren erhalten werden. Sie können aber auch in einem separaten Verfahrensschritt durch Emulgierung in eine disperse Form gebracht werden.

Besonders vorteilhaft für die Ausführung der vorliegenden Erfindung, und daher bevorzugt, ist der Einsatz von durch radikalische Polymerisation erhaltenen Polymerisaten und Copolymerisaten als Polymere, da durch die breite Palette der zur Verfügung stehenden Monomeren und Vernetzer der Fachmann die Möglichkeit hat, Polymere mit jeder erforderlichen Kombination von Lichtbrechungseigenschaften und chemischer und physikalischer Resistenz herzustellen.

Eine Übersicht über die Brechungsindices verschiedener gängiger Homopolymerisate findet sich z.B. in Ullmanns Encyklopädie der technischen Chemie, 5. Auflage, Band A21, Seite 169. Beispiele für radikalisch polymerisierbare Monomere, die zu Polymeren mit hohem Brechungsindex führen sind:

Gruppe a): Styrol, im Phenylkern alkylsubstituierte Styrole, $\alpha$-Methylstyrol, Mono- und Dichlorstyrol, Vinylnaphthalin, Isopropenylnaphthalin, Isopropenylbiphenyl, Vinylpyridin, Isopropenylpyridin, Vinylcarbazol, Vinylanthracen, N-Benzyl-methacrylamid, p-Hydroxymethacrylsäureanilid.

Gruppe b): Acrylate, die aromatische Seitenketten aufweisen, wie z.B. Phenyl-(meth)acrylat (=abgekürzte Schreibweise für die beiden Verbindungen Phenylacrylat und Phenylmethacrylat), Phenylvinylether, Benzyl-(meth)acrylat, Benzylvinylether, sowie Verbindungen der Formeln

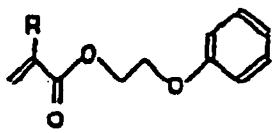

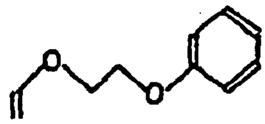

In den obigen und in weiter unten folgenden Formeln sind zur Verbesserung der Übersichtlichkeit und Vereinfachung der Schreibung Kohlenstoffketten nur durch die zwischen den Kohlenstoffatomen bestehenden Bindungen dargestellt. Diese Schreibweise entspricht der Darstellung aromatischer cyclischer Verbindungen, wobei z.B. das Benzol durch ein Sechseck mit alternierend einfachen und Doppelbindungen dargestellt wird.

Ferner sind solche Verbindungen geeignet, die anstelle von Sauerstoffbrücken Schwefelbrücken enthalten wie z.B.

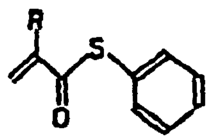

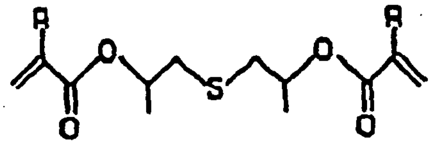

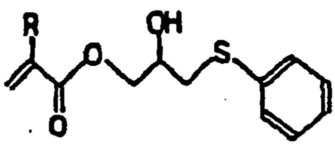

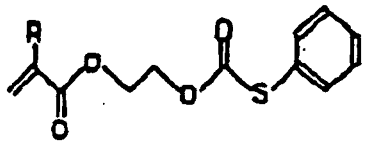

In den obigen Formeln steht R für Wasserstoff oder Methyl. Die Phenylringe dieser Monomeren können weitere Substituenten tragen. Solche Substituenten sind geeignet, die Eigenschaften der aus diesen Monomeren erzeugten Polymerisate innerhalb gewisser Grenzen zu modifizieren. Sie können daher gezielt benutzt werden, um insbesondere die anwendungstechnisch relevanten Eigenschaften der erfindungsgemäßen Effektfarbmittel zu optimieren.

Geeignete Substituenten sind insbesondere CN, Halogen, $NO_2$, Alkyl mit einem bis zwanzig C-Atomen, Alkoxy mit einem bis zwanzig C-Atomen, Carboxyalkyl mit einem bis zwanzig C-Atomen, Carbonyalkyl mit einem bis zwanzig C-Atomen, oder -OCOO-Alkyl mit einem bis zwanzig C-Atomen. Die Alkylketten dieser Reste können ihrerseits gegebenenfalls substituiert sein oder durch zweibindige Heteroatome oder Baugruppen wie z.B. -O-, -S-, -NH-, -COO-, -OCO- oder -OCOO- in nicht benachbarten Stellungen unterbrochen sein.

Gruppe c): Monomere, die über Heteroatome verfügen, wie z.B. Vinylchlorid, Vinylidenchlorid, Acrylnitril, Methacrylnitril, Acrylsäure, Methacrylsäure, Acrylamid und Methacrylamid oder metallorganische Verbindungen wie z.B.

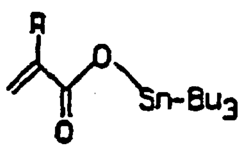

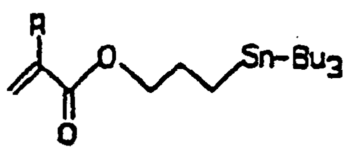

Gruppe d) Eine Erhöhung des Brechungsindex von Polymeren gelingt auch durch Einpolymerisieren Carbonsäuregruppen enthaltender Monomerer und Überführung der so erhaltenen "sauren" Polymeren in die entsprechenden Salze mit Metallen höheren Atomgewichts, wie z.B. vorzugsweise mit K, Ca, Sr, Ba, Zn, Pb, Fe, Ni, Co, Cr, Cu, Mn, Sn oder Cd.

Die oben genannten Monomeren, die einen hohen Beitrag zum Brechungsindex der daraus hergestellten Polymeren leisten, können homopolymerisiert oder untereinander copolymerisiert werden. Sie können auch mit einem gewissen Anteil von Monomeren, die einen geringeren Beitrag zum Brechungsindex leisten, copolymerisiert werden. Solche copolymerisierbaren Monomere mit niedrigerem Brechungsindex-Beitrag sind beispielsweise Acrylate, Methacrylate oder Vinylether oder Vinylester mit rein aliphatischen Resten.

In bevorzugten Ausführungsformen der vorliegenden Erfindung sind zumindest die Kernpolymeren, vorzugsweise die Polymeren von Kern und Schale, vernetzt.

Für die Vernetzung der Polymerisate gilt im Prinzip das oben für die Vernetzung der Polykondensate gesagte. Die Vernetzung kann zugleich mit der Polymerisation erfolgen, oder in einem separaten Schritt an die Polymerisation angeschlossen werden (Nachvernetzung). Eine besondere Form stellt die Vernetzung ohne Zusatzstoffe dar (Selbstvernetzung). Hierbei sind latent vernetzungsfähige, funktionelle Gruppen im Polymer bereits enthalten. Für verschiedene Anwendungen der erfindungsgemäßen Effektfarbmittel ist es vorteilhaft, die Kernpolymeren bereits bei der Polymerisation, die Schalenpolymeren nachträglich zu vernetzen.

Sind im Polymerisat entsprechende komplementäre Gruppen vorhanden, so können die oben genannten, für die Vernetzung von Polykondensaten geeigneten reaktiven Vernetzer, wie Epoxid-, Cyanat-, Isocyanat-, oder Isothiocyanatgruppen aufweisende Verbindungen, auch für die Vernetzung von Polymerisaten eingesetzt werden.

Als vernetzende Mittel für radikalisch erzeugte Polymerisate können darüberhinaus auch alle bi- oder polyfunktionellen Verbindungen eingesetzt werden, die mit den oben genannten Monomeren copolymerisierbar sind oder die nachträglich mit den Polymeren unter Vernetzung reagieren können.

Im Folgenden sollen Beispiele geeigneter Vernetzer vorgestellt werden, die zur Systematisierung in Gruppen eingeteilt werden:

Gruppe 1: Bisacrylate, Bismethacrylate und Bisvinylether von aromatischen oder aliphatischen di- oder Polyhydroxyverbindungen insbesondere von Butandiol (Butandiol-di(meth)acrylat, Butandiol-bis-vinylether), Hexandiol (Hexandiol-di(meth)acrylat, Hexandiol-bis-vinylether), Pentaerythrit, Hydrochinon, Bis-hydroxyphenylmethan, Bis-hydroxyphenylether, Bis-hydroxymethyl-benzol, Bisphenol A oder mit Ethylenoxidspacern, Propylenoxidspacem oder gemischten Ethlenoxid-Propylenoxidspacern.

Weitere Vernetzer dieser Gruppe sind z.B. Di- oder Polyvinylverbindungen wie Divinybenzol oder auch Methylen-bisacrylamid, Triallylcyanurat, Divinylethylenharnstoff, Trimethylolpropan-tri-(meth)acrylat, Trimethylolpropantrivinylether, Pentaerythrit-tetra-(meth)acrylat, Pentaerythrit-tetra-vinylether, sowie Vernetzer mit zwei oder mehreren verschiedenen reaktiven Enden wie z.B. (Meth)allyl-(meth)acrylate der Formeln

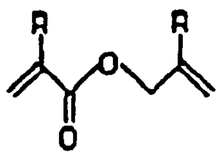
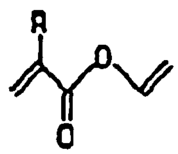
,
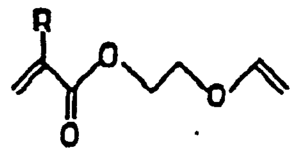

,worin R Wasserstoff oder Methyl bedeutet.

Gruppe 2: Reaktive Vernetzer, die vemetzend, größtenteils aber nachvernetzend wirken, z.B. bei Erwärmung oder Trocknung, und die in die Kern- bzw. Schalepolymere als Copolymere einpolymerisiert werden.

Beispiele hierfür sind: N-Methylol-(meth)acrylamid, Acrylamidoglycolsäure sowie deren Ether und/oder Ester mit $C_1$ bis $C_6$-Alkoholen, Acetacetoxyethylmethacrylamid (AAEM), Diacetonacrylamid (DAAM), Glycidylmethacrylat (GMA), Methacryloyloxypropyl-trimethoxysilan (MEMO), Vinyl-trimethoxysilan, m-Isopropenyl-benzylisocyanat (TMI).

Gruppe 3: Carbonsäuregruppen, die durch Copolymerisation ungesättigter Carbonsären in das Polymer eingebaut worden sind, werden über mehrwertige Metallionen brückenartig vernetzt. Als ungesättigte Carbonsäuren werden hierzu vorzugsweise Acrylsäure, Methacrylsäure, Maleinsäureanhydrid, Itaconsäure, und Furnarsäre eingesetzt. Als Metallionen eignen sich Mg, Ca, Sr, Ba, Zn, Pb, Fe, Ni, Co, Cr, Cu, Mn, Sn, Cd. Besonders bevorzugt sind Ca, Mg und Zn.

Gruppe 4: Nachvernetzende Additive. Hierunter versteht man bis- oder höherfunktionalisierte Additive, die mit dem Polymer (durch Additions- oder vorzugsweise Kondensationsreaktionen) irreversibel unter Ausbildung

eines Netzwerks reagieren. Beispiele hierfür sind Verbindungen, die pro Molekül mindestens zwei der folgenden reaktiven Gruppen aufweisen: Epoxid-, Aziridin-, Isocyanat-Säurechlorid-, Carbodiimid- oder Carbonylgruppen, ferner z.B. 3,4-Dihydroxy-imidazolinon und dessen Derivate (®Fixapret@-Marken der BASF).

Wie bereits oben dargelegt, benötigen Nachvernetzer mit reaktiven Gruppen wie z.B. Epoxid- und Isocyanatgruppen komplementäre reaktive Gruppen im zu vernetzenden Polymer. So reagieren Isocyanate beispielsweise mit Alkoholen zu Urethanen, mit Aminen zu Harnstoffderivaten, während Epoxide mit diesen komplementären Gruppen zu Hydroxyethern bzw. Hydroxyaminen reagieren.

Unter Nachvernetzung wird auch die photochemische Aushärtung, eine oxydative oder eine luft- oder feuchtigkeitsinduzierte Aushärtung der Systeme verstanden.

Die oben angegebenen Monomeren und Vernetzer können beliebig und zielgerichtet in der Weise miteinander kombiniert und (co-)polymerisiert werden, daß ein gegebenenfalls vernetztes (Co-)polymerisat mit dem gewünschten Brechungsindex und den erforderlichen Stabilitätskriterien und mechanischen Eigenschaften erhalten wird.

Es ist auch möglich, weitere gängige Monomere, z.B. Acrylate, Methacrylate, Vinylester, Butadien, Ethylen oder Styrol, zusätzlich zu copolymerisieren, um beispielsweise die Glastemperatur oder die mechanischen Eigenschaften der Kern- und Schalepolymeren nach Bedarf einzustellen.

Ein weiterer Gegenstand der vorliegenden Erfindung ist die Verwendung der erfindungsgemäßen Kern/Schale-Partikel oder deren Zubereitungen zur Herstellung von schützenden und/oder dekorativen Überzügen.

Zur Erzeugung von dekorativen und/oder schützenden Überzügen erfolgt zunächst ein Auftrag eines Beschichtungsmittels in an sich bekannter Weise auf das zu schützende, gegebenenfalls vorbehandelte Material, wobei als Beschichtungsmittel erfindungsgemäße Kern/Schale-Partikel oder eine Zubereitung derselben aufgetragen, gegebenenfalls vorhandenes flüssiges Dispergier- und/oder Verdünnungsmittel entfernt und anschließend das Schalenmaterial verfilmt und gewünschtenfalls vernetzt wird und dabei die Kerne orientiert werden. Substrate, die auf diese Weise mit einem dekorativen und/oder schützenden Überzug versehen werden können sind z.B. Papier, Karton, Leder, Folien Zellglas, Textilien, Kunststoffe, Glas, Keramik oder Metalle.

Ein weiterer Gegenstand der vorliegenden Erfindung ist die Verwendung der erfindungsgemäßen Kern/Schale-Partikel oder deren Zubereitungen zur Herstellung von Effektfarbmitteln.

Das Verfahren zur Herstellung eines Effektfarbmittels umfasst die folgenden Schritte:

a) Auftrag von Kern/Schale-Partikeln deren Kern- und Schalenmaterialien ein Zweiphasensystem ausbilden können, die dadurch gekennzeichnet sind, dass

- das Schalenmaterial verfilmbar ist,
- der Kern unter den Bedingungen der Verfilmung der Schale im Wesentlichen formbeständig ist,
- der Kern durch das Schalenmaterial nicht oder nur in sehr geringem Ausmaß quellbar ist,
- das Gewichtsverhältnis von Kern : Schale der Partikel 1,33 : 1 bis 20 : 1 beträgt,
- die Kerne eine Größe von 100 bis 700 nm und
- einen Polydispersitätsindex PI von unter 0,6 aufweisen,
- ein Unterschied $\Delta n$ von mindestens 0,001 zwischen den Brechungsindices des Kernmaterials und des Schalenmaterials besteht,
- oder einer Zubereitung derselben auf ein Substrat geringer Haftfähigkeit,

b) gegebenenfalls Verdunstenlassen oder Abtreiben des eventuell in der aufgetragenen Schicht enthaltenen Lösungs-oder Verdünnungsmittels,
c) Überführung des Schalenmaterials der Kern/Schale-Partikel in eine flüssige, weiche oder visco-elastische Matrix-Phase
d) Orientierung der Kerne der Kern/Schale-Partikel zumindest zu Domänen regelmäßiger Struktur,
e) Aushärtung des Schalenmaterials zur Fixierung der regelmäßigen Kern-Struktur
f) Ablösung des ausgehärteten Films vom Substrat und
g) sofern ein Pigment oder ein Pulver hergestellt werden soll, Zerkleinerung des abgelösten Films auf die gewünschte Partikelgröße.

In einer besonderen Ausführungsform dieses Verfahrens zur Herstellung von Effektfarbmitteln in Form eines Pigments erfolgt der Auftrag gemäß Verfahrensschritt a) in Form einer Vielzahl von Punkten von der Größe der gewünschten Pigmentpartikel erfolgt, und der Verfahrensschritt g) unterbleibt oder erleichtert wird.

Vorzugsweise wird bei der erfindungsgemäßen Herstellung der Effekt-Pigmente das Schalenmaterial so gewählt, dass nach der Verfilmung und gegebenenfalls Vernetzung Pigmente erhalten werden, mit einer gegen wässrige

und organische Medien beständigen Polymer-Matrix. Die erfindungsgemäß herstellbaren Pigmentpartikel haben eine plättchenförmige Struktur, d.h. dass ihre Dicke deutlich geringer ist, als ihre laterale Ausdehnung. Zweckmäßigerweise beträgt die Dicke erhaltenen Pigmentteilchen 1 bis 1000 μm, vorzugsweise 1 bis 100 μm, insbesondere 10 bis 100 μm. Dabei beträgt die laterale Ausdehnung 5 bis 5000 μm, vorzugsweise 20 bis 3000 μm, insbesondere 50 bis 1000 μm. Sie werden beispielsweise erhalten, indem eine flächige Verfilmung eines erfindungsgemäßen Pulvers nach bekannten Verfahren zerkleinert wird. Die so erhaltenen Pigmente zeichnen sich überraschenderweise durch eine hohe Lichtechtheit aus.

Soll ein Effektfarbmittel in Form einer Folie hergestellt werden, so wählt man ein im ausgehärteten Zustand zäh-elastisches Schalepolymer und unterlässt den Verfahrensschritt g).

Nach dem oben beschriebenen Verfahren werden Effektfarbmittel erhalten, die eine mit dem Beleuchtungs- und Betrachtungswinkel veränderliche Farbe aufweisen, umfassend im wesentlichen sphärische Polymerpartikel und eine kontinuierliche Matrixphase, die entweder alle Zwischenräume zwischen den im wesentlichen sphärischen Polymerpartikeln ausfüllt oder nur im Bereich der Berührungspunkte der sphärischen Polymerpartikel Klebepunkte bildet, die dadurch gekennzeichnet sind, dass die im wesentlichen sphärischen Polymerpartikel zumindest Domänen regelmäßiger Anordnung bilden, die durch die Matrixphase fixiert werden, die im wesentlichen sphärische Polymerpartikel eine Größe von 100 bis 700 nm und einen Polydispersitätsindex PI von unter 0,6 aufweisen dass das Gewichtsverhältnis von den im wesentlichen sphärische Polymerpartikeln zur Matrixphase 1,33 : 1 bis 20 : 1 beträgt und dass eine Differenz der Brechungsindices der im wesentlichen sphärischen Polymerpartikel und der Matrixphase von mindestens 0,001 besteht.

Die aus den erfindungsgemäßen Kern/Schale-Partikeln oder deren Zubereitungen herstellbaren Effektfarbmittel und Überzüge zeigen sehr interessante vom Lichteinfallswinkel und/oder dem Betrachtungswinkel abhängige Farbeffekte, die durch Interferenz an dem von den Kernpartikeln in dem Matrixmaterial gebildeten Raumgitter zustande kommen. Die winkelabhängige Farbänderung ist besonders eindrucksvoll, wenn ein solcher Effektfarbstoff auf dunklem, z.B. schwarzem, Untergrund, d.h. auf ein nicht selektiv absorbierendes Substrat aufgebracht wird.

Die bei den beschriebenen Verwendungen erforderliche Überführung des Schalenmaterials der Kern/Schale-Partikel in die Matrix eines Überzugs, eines Pigmentpartikels, oder einer Folie, die Verfilmung, kann routinemäßig ausgeführt werden.

Im einfachsten Fall, wenn das Schalenmaterial nur aus Matrixpolymeren besteht, erfolgt die Verfilmung durch Aufschmelzen oder Erweichen der Schale der Kern/Schale-Partikel, Orientieren der Kerne in der Matrix und Abkühlen und damit Verfestigen der geschmolzenen Matrix.

Bei Einsatz einer, vorzugweise wäßrigen, Dispersion von erfindungsgemäßen Kern/Schale-Partikeln, deren Schalenpolymer eine Glasübergangstemperatur unterhalb der Raumtemperatur aufweist, können bereits durch langsames Trocknenlassen der Dispersion die Verfahrensschritte a) bis e) durchlaufen werden unter Bildung einer für die Weiterverarbeitung geeigneten Effektfarbmittelschicht.

Enthält das Schalenmaterial noch Polymervorprodukte, so werden diese nach dem Aufschmelzen der Schalesubstanz durch Polymerisation, Kondensation, Weiterpolymerisation oder Weiterkondensation in zusätzliches Matrixpolymer überführt.

Die folgenden Ausführungsbeispiele veranschaulichen die Erfindung. Die in den Beispielen benutzten Emulgatoren haben folgende Zusammensetzungen:

Emulgator 1: 30 Gew.-%ige Lösung des Natriumsalzes eines ethoxylierten und sulfatierten Nonylphenols mit ca. 25 mol/mol Ethylenoxyd-Einheiten.

Die Teilchengrößen-Verteilungen wurden mit Hilfe einer analytischen Ultrazentrifuge bestimmt, und aus den erhaltenen Werten der P.I.- Wert nach der oben angegebenen Formel

$$P.I. = (D_{90} - D_{10})/D_{50}$$

berechnet

Lösungen sind, soweit nichts Anderes angegeben ist, wäßrige Lösungen. Die in den Beispielen verwendete Angabe pphm bedeutet Gew.-Teile bezogen auf 100 Gew.-Teile Gesamtmonomere.

Die für Monomere verwendeten Abkürzungen haben folgende Bedeutungen:

AS = Acrylsäure, n-BA = n-Butylacrylat, DVB = Divinylbenzol,
EA = Ethylacrylat, MAS = Methacrylsäure,
MAMol = N-Methylolmethacrylamid, NaPS = Natriumpersulfat

Beispiel 1A

Herstellung einer Dispersion von Kern-Partikeln.

In einem mit Ankerrührer, Thermometer, Gaseinleitungsrohr, Tropftrichter und Rückflußkühler versehenen Glasreaktor wird eine Dispersion von 0,9 g (0,20 pphm) Polystyrol-Saat (Partikelgröße: 30 nm) in 500 ml Wasser vorgelegt und unter Rühren in einem Heizbad erwärmt, wobei gleichzeitig die Luft durch Einleiten von Stickstoff verdrängt wird.

Wenn das Heizbad die voreingestellte Temperatur von 85°C und der Reaktorinhalt die Temperatur von 80°C erreicht hat, wird die Stickstoffeinleitung unterbrochen und es werden gleichzeitig im Verlauf von 3 Stunden eine Emulsion von 445,5 g Styrol (99,0 Gew.-%), 4,5 g Divinylbenzol (1,0 Gew.-%) und 14,5 g Emulgator 1 (1,0 pphm) in 501,3 ml Wasser und 54,0 g einer 2,5 gew.-%igen wäßrigen Lösung von Natriumpersulfat (0,3 pphm) zutropfen gelassen. Nach vollständigem Zulauf der Lösungen wird die Polymerisation noch 2 Stunden bei 85°C fortgesetzt und anschließend auf Zimmertemperatur abgekühlt.

**Die Dispersion hat folgende Eigenschaften:**

| | |
|---|---|
| Feststoffgehalt | 29,6 Gew.-% |
| Partikelgröße | 255 nm |
| Koagulatanteil | < 1 g |
| pH-Wert | 2,3 |
| Polydispersitätsindex | 0,13 |
| Brechungsindex n | 1,59 |

Das Beispiel 1A wurde mehrfach wiederholt, wobei die Konzentration der Saatpartikel variiert wurde. Die folgende Tabelle 1 gibt eine Übersicht über die erhaltenen Versuchsergebnisse.

Tabelle 1

| Beisp. Nummer | 1A | 1B | 1C | 1D | 1E | 1F | 1G |
|---|---|---|---|---|---|---|---|
| Saat-Konz. Gew.% | 0,20 | 0,15 | 0,10 | 0,053 | 0,30 | 0,53 | 3,16 |
| Festst. Gehalt Gew.% | 28,8 | 28,4 | 28,5 | 29,4 | 29,3 | 30,0 | 28,6 |
| Part.-Größe [nm] | 256 | 280 | 317 | 357 | 222 | 188 | 125 |
| P.I. | 0,13 | - | - | 0,19 | - | - | 0,221 |

**Beispiel 2A**

**Herstellung einer Dispersion von Kern/Schale-Partikeln.**

In einem mit Ankerrührer, Thermometer, Gaseinleitungsrohr, Tropftrichter und Rückflußkühler versehenen Glasreaktor werden 300 g der in Beispiel 1A erhaltenen Dispersion von Kernpartikeln vorgelegt und unter Rühren in einem Heizbad erwärmt, wobei gleichzeitig die Luft durch Einleiten von Stickstoff verdrängt wird. Wenn das Heizbad die voreingestellte Temperatur von 85°C und der Reaktorinhalt die Temperatur von 80°C erreicht hat, wird die Stickstoffeinleitung unterbrochen und es werden gleichzeitig im Verlauf von 1,5 Stunden

a) eine Mischung von 84,7 g (98,0 Gew.-%) n-Butylacrylat, 0,86 (1,0 Gew.-%) Acrylsäure, 5,76 g (1,0 Gew.-%) einer 15 gew.-%igen Lösung von N-Methylolmethacrylamid, 2,86 g einer 31 gew.-%igen Lösung (0,97 pphm) des Emulgators 1 und 12.4 g Wasser sowie
b) 17,3g einer 2,5 gew.-%igen wäßrigen Lösung von Natriumpersulfat (0,5 pphm) zutropfen gelassen.

Nach vollständigem Zulauf der Lösungen wird die Polymerisation noch 3 Stunden bei 85°C fortgesetzt. Danach wird die erhaltene Dispersion von Kern/Schale-Partikeln auf Zimmertemperatur abgekühlt. Die Dispersion hat folgende Eigenschaften:

| | |
|---|---|
| Feststoffgehalt | 40,6 Gew.-% |
| Partikelgröße | 307 nm |

(fortgesetzt)

| | |
|---|---|
| Polydispersitätsindex | 0,16 |
| Gewichtsverhältnis Kern:Schale | 1:1 (berechnet) |
| Brechungsindex n des Schalenpolymers | 1,44 |

Das Beispiel 2A wurde zweimal wiederholt, wobei die Konzentration der Kempartikel und das Gewichtsverhältnis von Kern:Schale variiert wurde. Die folgende Tabelle 2 gibt eine Übersicht über die erhaltenen Versuchsergebnisse.

Tabelle 2

| Beisp. Nummer | 2A | 2B | 2C |
|---|---|---|---|
| Kernanteil [Gew.-%] | 100,0 | 133,3 | 225,0 |
| n-BA [Gew.-%] | 98,0 | 98,0 | 98,0 |
| AS [Gew.-%] | 1,0 | 1,0 | 1,0 |
| MAMol [Gew.-%] | 1,0 | 1,0 | 1,0 |
| Schale:Kern-Verhältnis | 1:1 | 0,75:1 | 0,44.1 |
| Partikelgröße [nm] | 301 | 308 | 284 |
| P.I. | 0.162 | 0,137 | 0,144 |
| Feststoffgehalt [Gew.-%] | 39,4 | 40,6 | 35,2 |

**Beispiel 3**

**Herstellung einer festen Zubereitung erfindungsgemäßer Kern/Schale-Partikel.**

15 g der gemäß Beispiel 2C erhaltenen Dispersion wurden in einer Silicongummi-Schale (7x15 cm) bei Zimmertemperatur getrocknet. Der Rückstand bildet eine leuchtend effektfarbige Schicht, die sich leicht zerkleinern ließ. Die erhaltene Schüttung besteht aus unregelmäßig geformten, plättchenförmigen Partikeln einer festen, emulgatorhaltigen Zubereitung der Kern/Schale Partikel. Nach kurzzeitiger Temperaturbelastung (1 Min. 120°C) nimmt die Redispergierbarkeit weiter ab. Nach Zerkleinerung der Plättchen auf die Größe von Pimentpartikeln lassen sich daraus Lacke, Farben oder Tinten herstellen. Die damit erzeugten Anstriche, Drucke oder Zeichnungen zeigen wunderbar leuchtende Effektfarben.

Ähnlich vorteilhafte feste Zubereitungen werden erhalten, wenn die oben eingesetzte Dispersion gefriergetrocknet oder bei nicht über 40°C im Vakuum sprühgetrocknet wird. Das durch Sprühtrocknung erhaltene Pulver besteht aus einer Schüttung von Klustern der Kern/Schale-Partikel, in denen die Partikel regelmäßig, kristallgitterartig angeordnet sind.

**Beispiel 4A**

**Verfilmung der Kern/Schale-Partikel**

15 g der gemäß Beispiel 2C erhaltenen Dispersion werden in einer Silicongummi-Schale bei Zimmertemperatur durch Verdunstenlassen des Wassers getrocknet. Anschließend wird die erhaltene leuchtend effektfarbige Schicht, in einem Vakuumtrockenschrank 1 Stunde bei 120°C getempert und anschließend auf Zimmertemperatur abgekühlt.

Es wird ein harter, mechanisch stabiler, transparenter Film erhalten, der eine leuchtende, mit dem Beleuchtungs- und Betrachtungswinkel veränderliche Farbe aufweist. Wird dieser Film zu Partikeln von der Größe von Pigmentteilchen zerkleinert, so kann er zu Herstellung von Pigment-Effektfarben dienen. Wird der Film auf einem haftfähigen Substrat erzeugt, so bildet er darauf einen widerstandsfähigen schützenden und dekorativen Überzug mit sehr ansprechendem Farbeffekt. Ähnliche Filme mit etwas geändertem Farbenspiel werden erhalten, wenn man die Schicht der Kern/Schale-Partikel 1 Stunde bei 150°C oder 180°C tempert.

Das Beispiel zeigt, daß ein Polymerisationsansatz direkt als "flüssige Zubereitung" zur Herstellung von Effektfarbmitteln verwendet werden kann.

**Beispiel 4B**

15 g der gemäß Beispiel 2A erhaltenen Dispersion werden in einer Silicongummi-Schale bei Zimmertemperatur getrocknet. Man erhält eine leuchtend effektfarbige Schicht von gummiartiger Elastizität. Wird diese in einem Vakuumtrockenschrank 1 Stunde bei 120°C getempert und anschließend auf Zimmertemperatur abgekühlt so erhöht sich ihre Elastizität noch und es zeigt sich eine leichte Veränderung der Farbe. Beim Dehnen der Schicht ändert sich ihre Farbe mit dem Dehnungsverhältnis von Braun über Grün nach Violett.

**Beispiel 4C**

13,5 g der gemäß Beispiel 2A erhaltenen Dispersion werden mit 1,5 g einer feinteiligen, 20 gew.-%igen wäßrigen Dispersion eines Copolymerisats von 94 Gew.-% Ethylacrylat und 6 Gew.-% Methacrylsäure mit einer mittleren Teilchengröße von 30 nm und einer Glastemperatur von ca. 0°C gemischt und die Mischung in einer Silicongummi-Schale bei Zimmertemperatur getrocknet. Man erhält eine effektfarbige Schicht, die mechanisch noch stabiler ist als die in Beispiel 4B erhaltene. Das Beispiel veranschaulicht die Erleichterung und Verbesserung der Verfilmung durch den Copolymerzusatz.

Bei weiterer Erhöhung des Anteils der zugesetzten Ethylacrylat/Methacrylsäuredispersion erhält man Schichten deren Farbe sich von den kräftigen Braun- und Grüntönen zu einem seidigen Metallic-Effekt ändert.

**Beispiel 4D**

20 g der gemäß Beispiel 2A erhaltenen Dispersion werden mit 2 g Diethylenglycoldiethylether (DGDE), gemischt, mit 10 g Wasser verdünnt und die Mischung in einer Silicongummi-Schale bei Zimmertemperatur getrocknet. Man erhält eine leuchtend effektfarbige Schicht, die mechanisch noch stabiler ist als die in Beispiel 4B erhaltene. Das Beispiel zeigt, daß auch der Zusatz des DGDE das Verfilmen der Schalepolymeren bereits bei Zimmertemperatur ermöglicht, dabei aber nur einen geringen Einfluß auf die Farbe der verfilmten Schicht hat.

**Patentansprüche**

1. Kern/Schale-Partikel, deren Kern- und Schalenmaterialien ein Zweiphasensystem ausbilden können, **dadurch gekennzeichnet, dass**

   - das Schalenmaterial zu einer Matrix verfilmbar ist,
   - der Kern unter den Bedingungen der Verfilmung der Schale im Wesentlichen formbeständig ist,
   - der Kern durch das Schalenmaterial nicht oder nur in sehr geringem Ausmaß quellbar ist,
   - die Kerne eine Größe von 200 bis 400 nm und einen Polydispersitätsindex von unter 0,6 aufweisen,
   - das Gewichtsverhältnis von Kern : Schale der Partikel 1,33 : 1 bis 20 : 1 beträgt, und
   - ein Unterschied $\Delta n$ von mindestens 0,001 zwischen den Brechungsindices des Kernmaterials und der bei der Verfilmung des Schalenmaterials entstehenden Matrix besteht.

2. Kern/Schale-Partikel, deren Kern- und Schalenmaterialien ein Zweiphasensystem ausbilden können, **dadurch gekennzeichnet, dass**

   - das Schalenmaterial zu einer Matrix verfilmbar ist,
   - der Kern unter den Bedingungen der Verfilmung der Schale im Wesentlichen formbeständig ist,
   - der Kern durch das Schalenmaterial nicht oder nur in sehr geringem Ausmaß quellbar ist,
   - die Kerne eine Größe von 200 bis 400 nm und einen Polydispersitätsindex von unter 0,6 aufweisen.
   - das Gewichtsverhältnis von Kern : Schale der Partikel 2,5 : 1 bis 5 : 1 beträgt, und
   - ein Unterschied $\Delta n$ von mindestens 0,001 zwischen den Brechungsindices des Kernmaterials und der bei der Verfilmung des Schalenmaterials entstehenden Matrix besteht.

3. Kern/Schale-Partikel nach Anspruch 2, **dadurch gekennzeichnet, dass** die Kern eine Größe von 200 bis 400 nm aufweisen.

4. Kern/Schale-Partikel gemäß Anspruch 1 oder 2, **dadurch gekennzeichnet, dass** der Unterschied $\Delta n$ zwischen den Brechungsindices des Schale- und des Kernmaterials mindestens 0,01 insbesondere mindestens 0,1 beträgt.

5. Kern/Schale-Partikel gemäß mindestens einem der Ansprüche 1 bis 4, **dadurch gekennzeichnet, dass** die Kerne der Kern/Schale-Partikel einen Polydispersitätsindex P.L von unter 0,4, vorzugsweise unter 0,3, insbesondere unter 0,2 aufweisen.

6. Kern/Schale-Partikel gemäß Anspruch 1, **dadurch gekennzeichnet, dass** das Gewichtsverhältnis von Kern : Schale der Partikel 2,5:1 bis 5:1 beträgt.

7. Kern/Schale-Partikel gemäß mindestens einem der Ansprüche 1 bis 6, **dadurch gekennzeichnet, dass** der Kern ein oder mehrere Polymere (Kernpolymere) enthält, die vorzugsweise vernetzt sind, und die Schale ein oder mehrere Polymere (Schalenpolymere) oder Polymer-Vorprodukte und gegebenenfalls bis zu 40 Gew.-%, vorzugsweise gegebenenfalls bis zu 20 Gew.-%, Hilfs-und Zusatzstoffe enthält und die Schale in nichtquellender Umgebung bei Raumtemperatur im wesentlichen formbeständig und klebfrei ist.

8. Kern/Schale-Partikel gemäß mindestens einem der Ansprüche 1 bis 7, erhalten durch Emulsionspolymerisation in wässrigem Medium.

9. Feste Zubereitungen umfassend 70 bis 99 Gew.-%, vorzugsweise 80 bis 95 Gew.-%, Kern/Schale-Partikel des Anspruchs 1 oder 2 und 30 bis 1 Gew.-%, vorzugsweise 20 bis 5 Gew.-%, eines bei Normaltemperatur festen Substanzgemisches aus Hilfsmitteln und/oder Zusatzstoffen.

10. Pastöse oder fluide, insbesondere streich-, spritz- oder gießfähige Zubereitungen umfassend 5 bis 75 Gew.-%, vorzugsweise 10 bis 65 Gew.-%, insbesondere 20 bis 50 Gew.-% Kern/Schale-Partikel des Anspruchs 1 oder 2 und 95 bis 25 Gew.-%, vorzugsweise 90 bis 35 Gew.-%, insbesondere 80 bis 50 Gew.-% eines bei Normaltemperatur oder erst bei erhöhter Temperatur flüssigen Substanzgemisches aus Lösungs-, Dispergier- oder Hilfsmitteln und/oder Zusatzstoffen.

11. Verfahren zur Herstellung der Kern/Schale-Partikel des Anspruchs 1, bei dem in einem separaten Verfahrensschritt vorgefertigte Kerne aus Kernpolymeren mit Monomeren oder Präpolymeren der Schalepolymeren und gewünschtenfalls Hilfs- und/oder Zusatzstoffen in einem inerten flüssigen Reaktionsmedium homogenisiert werden und die Polymer-Vorstufen an- oder auspolymerisiert werden, wobei die Polymerisationsbedingungen so eingestellt werden, dass die Schalepolymeren oder Polymervorprodukte sich auf den Kernpartikeln abscheiden, **dadurch gekennzeichnet,**

- **dass** monodisperse Kerne mit einer Größe von 200 bis 400 nm und einem Polydispersitätsindex PI von unter 0,6 eingesetzt werden,
- **dass** die Monomeren und/oder Präpolymeren nach Menge und Art so ausgewählt werden,
- **dass** das Schalenmaterial verfilmbar ist, der Kern unter den Bedingungen der Verfilmung der Schale im Wesentlichen formbeständig ist, der Kern durch das Schalenmaterial nicht oder nur in sehr geringem Ausmaß quellbar ist, und ein Unterschied zwischen den Brechungsindices des Kernmaterials und der bei der Verfilmung des Schalenmaterials gebildeten Matrix von mindestens 0,001 besteht und
- **dass** das Gewichtsverhältnis von Kern : Schale der Partikel 1,33 : 1 bis 20 : 1 beträgt.

12. Verfahren zur Herstellung der Kern/Schale-Parlikel des Anspruchs 2, bei dem in einem separaten Verfahrensschritt vorgefertigte Kerne aus Kernpolymeren mit Monomeren oder Präpolymeren der Schalepolymeren und gewünschtenfalls Hilfs- und/oder Zusatzstoffen in einem inerten flüssigen Reaktionsmedium homogenisiert werden und die Polymer-Vorstufen an- oder auspolymerisiert werden, wobei die Polymerisationsbedingungen so eingestellt werden, dass die Schalepolymeren oder Polymervorprodukte sich auf den Kernpartikeln abscheiden, **dadurch gekennzeichnet,**

- **dass** monodisperse Kerne mit einer Größe von 100 bis 700 nm und einem Polydispersitätsindex PI von unter 0,6 eingesetzt werden,
- **dass** die Monomeren und/oder Präpolymeren nach Menge und Art so ausgewählt werden,
- **dass** das Schalenmaterial verfilmbar ist, der Kern unter den Bedingungen der Verfilmung der Schale im Wesentlichen formbeständig ist, der Kern durch das Schalenmaterial nicht oder nur in sehr geringem Ausmaß quellbar ist, und ein Unterschied zwischen den Brechungsindices des Kernmaterials und der bei der Verfilmung des Schalenmaterials gebildeten Matrix von mindestens 0,001 besteht und
- **dass** das Gewichtsverhältnis von Kern : Schale der Partikel 2,5 : 1 bis 5 : 1 beträgt.

**13.** Verfahren gemäß Anspruch 11 oder 12, **dadurch gekennzeichnet, dass** das Verfahren in einem Zweistufen-Eintopf-Prozess ausgeführt wird, wobei in dem ersten Reaktionsschritt aus den ausgewählten Polymer-Vorstufen (Monomeren und/oder Präpolymeren) die Kernpolymer-Partikel hergestellt werden und anschließend gemäß Anspruch 11 weitergearbeitet wird.

**14.** Verfahren gemäß mindestens einem der Ansprüche 11 und 12, **dadurch gekennzeichnet, dass** zur Herstellung von Zubereitungen der Ansprüche 9 und 10 die Polymerisation der Schalepolymeren in Gegenwart aller oder eines Teils der in der Zubereitung enthaltenen Hilfs- und/oder Zusatzstoffe und gegebenenfalls Dispergier- oder Verdünnungsmittel ausgeführt wird, oder dass diese ganz oder teilweise während oder nach Abschluss der Polymerisation zugefügt werden, wobei die Zusätze so gewählt werden, dass ihre Mischung je nach Bedarf fest oder fluide ist, und dass nach Abschluss der Polymerisation das inerte Reaktionsmedium ganz oder teilweise entfernt wird.

**15.** Verfahren gemäß mindestens einem der Ansprüche 11 bis 14, **dadurch gekennzeichnet, dass** das inerte Reaktionsmedium durch Verdunstenlassen, gegebenenfalls im Vakuum, durch Gefriertrocknung oder durch Sprühtrocknung entfernt wird.

**16.** Verwendung der Kern/Schale-Partikel deren Kern- und Schalenmaterialien ein Zweiphasensystem ausbilden können, wobei

- das Schalenmaterial zu einer Matrix verfilmbar ist,
- der Kern unter den Bedingungen der Verfilmung der Schale im Wesentlichen formbeständig ist,
- der Kern durch das Schalenmaterial nicht oder nur in sehr geringem Ausmaß quellbar ist,
- die Kerne eine Größe von 200 bis 400 nm und einen Polydispersitätsindex von unter 0,6 aufweisen,
- das Gewichtsverhältnis von Kern : Schale der Partikel 1,33 : 1 bis 20 : 1 beträgt, und
- ein Unterschied $\Delta n$ von mindestens 0,001 zwischen den Brechungsindices des Kernmaterials und der bei der Verfilmung des Schalenmaterials entstehenden Matrix besteht,

oder der Zubereitungen umfassend 70 bis 99 Gew.-%, vorzugsweise 80 bis 95 Gew.-%, Kern/Schake-Partikel deren Kern- und Schalenmaterialien ein Zweiphasensystem ausbilden können, wobei

- das Schalenmaterial zu einer Matrix verfilmbar ist,
- der Kern unter den Bedingungen der Verfilmung der Schale im Wesentlichen formbeständig ist,
- der Kern durch das Schalenmaterial nicht oder nur in sehr geringem Ausmaß quellbar ist,
- die Kerne eine Größe von 200 bis 400 nm und einen Polydispersitätsindex von unter 0,6 aufweisen,
- das Gewichtsverhältnis von Kern : Schale der Partikel 1,33 : 1 bis 20 : 1 beträgt, und
- ein Unterschied $\Delta n$ von mindestens 0,001 zwischen den Brechungsindices des Kernmaterials und der bei der Verfilmung des Schalenmaterials entstehenden Matrix besteht,

und 30 bis 1 Gew.-%, vorzugsweise 20 bis 5 Gew.-%, eines bei Normaltemperatur festen Substanzgemisches aus Hilfsmitteln und/oder Zusatzstoffen
oder umfassend 5 bis 75 Gew.-%, vorzugsweise 10 bis 65 Gew.-%, insbesonder 20 bis 50 Gew.-% Kern/Schake-Partikel deren Kern- und Schalenmaterialien ein Zweiphasensystem ausbilden können, wobei

- das Schalenmaterial zu einer Matrix verfilmbar ist,
- der Kern unter den Bedingungen der Verfilmung der Schale im Wesentlichen formbeständig ist,
- der Kern durch das Schalenmaterial nicht oder nur in sehr geringem Ausmaß quellbar ist,
- die Kerne eine Größe von 200 bis 400 nm und einen Polydispersitätsindex von unter 0,6 aufweisen,
- das Gewichtsverhältnis von Kern : Schale der Partikel 1,33 : 1 bis 20 : 1 beträgt, und
- ein Unterschied $\Delta n$ von mindestens 0,001 zwischen den Brechungsindices des Kernmaterials und der bei der Verfilmung des Schalenmaterials entstehenden Matrix besteht,

und 95 bis 25 Gew.-%, vorzugsweise 90 bis 35 Gew.-%, insbesondere 80 bis 50 Gew.-% eines bei Normaltemperatur oder erst erhöhter Temperatur flüssigen Substanzgemisches aus Lösungs-, Dispergier- oder Hilfsmitteln und/oder Zusatzstoffen, zur Herstellung von schützenden und/oder dekorativen Überzügen.

**17.** Verfahren zur Erzeugung von dekorativen und/oder schützenden Überzügen durch Auftrag eines Beschichtungsmittels in an sich bekannter Weise auf das zu schützende, gegebenenfalls vorbehandelte Material, **dadurch gekennzeichnet, dass** Kern/Schale-Partikel deren Kern- und Schalenmaterialien ein Zweiphasensystem ausbilden

können, wobei

- das Schalenmaterial zu einer Matrix verfilmbar ist,
- der Kern unter den Bedingungen der Verfilmung der Schale im Wesentlichen formbeständig ist,
- der Kern durch das Schalenmaterial nicht oder nur in sehr geringem Ausmaß quellbar ist,
- die Kerne eine Größe von 200 bis 400 nm und einen Polydispersitätsindex von unter 0,6 aufweisen,
- das Gewichtsverhältnis von Kern : Schale der Partikel 1,33 : 1 bis 20 : 1 beträgt, und
- ein Unterschied Δn von mindestens 0,001 zwischen den Brechungsindices des Kernmaterials und der bei der Verfilmung des Schalenmaterials entstehenden Matrix besteht,

oder eine Zubereitung umfassend 70 bis 99 Gew.-%, vorzugsweise 80 bis 95 Gew.-%, Kern/Schake-Partikel deren Kern- und Schalenmaterialien ein Zweiphasensystem ausbilden können, wobei

- das Schalenmaterial zu einer Matrix verfilmbar ist,
- der Kern unter den Bedingungen der Verfilmung der Schale im Wesentlichen formbeständig ist,
- der Kern durch das Schalenmaterial nicht oder nur in sehr geringem Ausmaß quellbar ist,
- die Kerne eine Größe von 200 bis 400 nm und einen Polydispersitätsindex von unter 0,6 aufweisen,
- das Gewichtsverhältnis von Kern : Schale der Partikel 1,33 : 1 bis 20 : 1 beträgt, und
- ein Unterschied Δn von mindestens 0,001 zwischen den Brechungsindices des Kernmaterials und der bei der Verfilmung des Schalenmaterials entstehenden Matrix besteht,

und 30 bis 1 Gew.-%, vorzugsweise 20 bis 5 Gew.-%, eines bei Normaltemperatur festen Substanzgemisches aus Hilfsmitteln und/oder Zusatzstoffen
oder umfassend 5 bis 75 Gew.-%, vorzugsweise 10 bis 65 Gew.-%, insbesonder 20 bis 50 Gew.-% Kern/Schake-Partikel deren Kern- und Schalenmaterialien ein Zweiphasensystem ausbilden können, wobei

- das Schalenmaterial zu einer Matrix verfilmbar ist,
- der Kern unter den Bedingungen der Verfilmung der Schale im Wesentlichen formbeständig ist,
- der Kern durch das Schalenmaterial nicht oder nur in sehr geringem Ausmaß quellbar ist,
- die Kerne eine Größe von 200 bis 400 nm und einen Polydispersitätsindex von unter 0,6 aufweisen,
- das Gewichtsverhältnis von Kern : Schale der Partikel 1,33 : 1 bis 20 : 1 beträgt, und
- ein Unterschied Δn von mindestens 0,001 zwischen den Brechungsindices des Kernmaterials und der bei der Verfilmung des Schalenmaterials entstehenden Matrix besteht,

und 95 bis 25 Gew.-%, vorzugsweise 90 bis 35 Gew.-%, insbesondere 80 bis 50 Gew.-% eines bei Normaltemperatur oder erst erhöhter Temperatur flüssigen Substanzgemisches aus Lösungs-, Dispergier- oder Hilfsmitteln und/oder Zusatzstoffen, aufgetragen, gegebenenfalls vorhandenes flüssiges Dispergier- und/oder Verdünnungsmittel entfernt und anschließend das Schalenmaterial verfilmt und gewünschtenfalls vernetzt wird und dabei die Kerne orientiert werden.

**18.** Verwendung der Kern/Schale-Partikel deren Kern- und Schalenmaterialien ein Zweiphasensystem ausbilden können, wobei

- das Schalenmaterial zu einer Matrix verfilmbar ist,
- der Kern unter den Bedingungen der Verfilmung der Schale im Wesentlichen formbeständig ist,
- der Kern durch das Schalenmaterial nicht oder nur in sehr geringem Ausmaß quellbar ist,
- die Kerne eine Größe von 200 bis 400 nm und einen Polydispersitätsindex von unter 0,6 aufweisen,
- das Gewichtsverhältnis von Kern : Schale der Partikel 1,33 : 1 bis 20 : 1 beträgt, und
- ein Unterschied Δn von mindestens 0,001 zwischen den Brechungsindices des Kernmaterials und der bei der Verfilmung des Schalenmaterials entstehenden Matrix besteht,

oder der Zubereitungen umfassend 70 bis 99 Gew.-%, vorzugsweise 80 bis 95 Gew.-%, Kern/Schake-Partikel deren Kern- und Schalenmaterialien ein Zweiphasensystem ausbilden können, wobei

- das Schalenmaterial zu einer Matrix verfilmbar ist,
- der Kern unter den Bedingungen der Verfilmung der Schale im Wesentlichen formbeständig ist,
- der Kern durch das Schalenmaterial nicht oder nur in sehr geringem Ausmaß quellbar ist,
- die Kerne eine Größe von 200 bis 400 nm und einen Polydispersitätsindex von unter 0,6 aufweisen,

- das Gewichtsverhältnis von Kern : Schale der Partikel 1,33 : 1 bis 20 : 1 beträgt, und
- ein Unterschied Δn von mindestens 0,001 zwischen den Brechungsindices des Kernmaterials und der bei der Verfilmung des Schalenmaterials entstehenden Matrix besteht,

und 30 bis 1 Gew.-%, vorzugsweise 20 bis 5 Gew.-%, eines bei Normaltemperatur festen Substanzgemisches aus Hilfsmitteln und/oder Zusatzstoffen
oder umfassend 5 bis 75 Gew.-%, vorzugsweise 10 bis 65 Gew.-%, insbesonder 20 bis 50 Gew.-% Kern/Schake-Partikel deren Kern- und Schalenmaterialien ein Zweiphasensystem ausbilden können, wobei

- das Schalenmaterial zu einer Matrix verfilmbar ist,
- der Kern unter den Bedingungen der Verfilmung der Schale im Wesentlichen formbeständig ist,
- der Kern durch das Schalenmaterial nicht oder nur in sehr geringem Ausmaß quellbar ist,
- die Kerne eine Größe von 200 bis 400 nm und einen Polydispersitätsindex von unter 0,6 aufweisen,
- das Gewichtsverhältnis von Kern : Schale der Partikel 1,33 : 1 bis 20 : 1 beträgt, und
- ein Unterschied Δn von mindestens 0,001 zwischen den Brechungsindices des Kernmaterials und der bei der Verfilmung des Schalenmaterials entstehenden Matrix besteht,

und 95 bis 25 Gew.-%, vorzugsweise 90 bis 35 Gew.-%, insbesondere 80 bis 50 Gew.-% eine bei Normaltemperatur oder erst bei erhöhter Temperatur flüssigen Substanzgemisches aus Lösungs-, Dispergier- oder Hilfsmitteln und/ oder Zusatzstoffen, zur Herstellung von Effektfarbmitteln.

**19.** Verfahren zur Herstellung eines Effektfarbmittels umfassend die folgenden Schritte:

a) Auftrag von Kern/Schale-Partikeln deren Kern- und Schalenmaterialien ein Zweiphasensystem ausbilden können, **dadurch gekennzeichnet, dass**

- das Schalenmaterial verfilmbar ist,
- der Kern unter den Bedingungen der Verfilmung der Schale im Wesentlichen formbeständig ist,
- der Kern durch das Schalenmaterial nicht oder nur in sehr geringem Ausmaß quellbar ist,
- das Gewichtsverhältnis von Kern : Schale der Partikel 1,33 : 1 bis 20 : 1 beträgt,
- die Kerne eine Größe von 100 bis 700 nm und
- einen Polydispersitätsindex PI von unter 0,6 aufweisen,
- ein Unterschied Δn von mindestens 0,001 zwischen den Brechungsindices des Kernmaterials und des Schalenmaterials besteht,
- oder einer Zubereitung derselben auf ein Substrat geringer Haftfähigkeit,

b) Gegebenenfalls Verdunstenlassen oder Abtreiben des eventuell in der aufgetragenen Schicht enthaltenen Lösungs-oder Verdünnungsmittels,
c) Überführung des Schalenmaterials der Kern/Schale-Partikel in eine flüssige, weiche oder visco-elastische Matrix-Phase,
d) Orientierung der Kerne der Kern/Schale-Partikel zumindest zu Domänen regelmäßiger Struktur,
e) Aushärtung des Schalenmaterials zur Fixierung der regelmäßigen Kernstruktur,
f) Ablösung des ausgehärteten Films vom Substrat und
g) sofern ein Pigment oder ein Pulver hergestellt werden soll, Zerkleinerung des abgelösten Films auf die gewünschte Partikelgröße.

**20.** Verfahren zur Herstellung eines Effektfärbmittels umfassend die folgenden Schritte:

a) Auftrag von Kem/Schale-Partikeln deren Kern- und Schalenmaterialien ein Zweiphasensystem ausbilden können, **dadurch gekennzeichnet, dass**

- das Schalenmaterial verfilmbar ist,
- der Kern unter den Bedingungen der Verfilmung der Schale im Wesentliche formbeständig ist,
- der Kern durch das Schalenmaterial nicht oder nur in sehr geringem Ausmaß quellbar ist,
- das Gewichtsverhältnis von Kern : Schale der Partikel 2,5 : 1 bis 5 : 1 beträgt,
- die Kerne eine Größe von 100 bis 700 nm und
- einen Polydispersitätsindex PI von unter 0,6 aufweisen,
- ein Unterschied Δn von mindestens 0,001 zwischen den Brechungsindices des Kernmaterials und des

Schalenmaterials besteht,
- oder einer Zubereitung derselben auf ein Substrat geringer Haftfähigkeit,

b) Gegebenenfalls Verdunstenlassen oder Abtreiben des eventuell in der aufgetragenen Schicht enthaltenen Lösungs-oder Verdünnungsmittels,
c) Überführung des Schalenmaterials der Kern/Schale-Partikel in eine flüssige, weiche oder visco-elastische Matrix-Phase,
d) Orientierung der Kerne der Kern/Schale-Partikel zumindest zu Domänen regelmäßiger Struktur,
e) Aushärtung des Schalenmaterials zur Fixierung der regelmäßigen Kornstruktur
f) Ablösung des ausgehärteten Films vom Substrat und
g) sofern ein Pigment oder ein Pulver hergestellt werden soll, Zerkleinerung des abgelösten Films auf die gewünschte Partikelgröße.

**21.** Verfahren gemäß Anspruch 19 oder 20, **dadurch gekennzeichnet, dass** Kern/Schale-Partikel eingesetzt werden, deren Kerne einen Polydispersitätsindex PI von unter 0,4 aufweisen.

**22.** Verfahren gemäß mindestens einem der Ansprüche 19, 20 oder 21, zur Herstellung eines Effektfarbmittels in Form eines Pigments, **dadurch gekennzeichnet, dass** der Auftrag gemäß Verfahrensschritt a) in Form einer Vielzahl von Punkten von der Größe der gewünschten Pigmentpartikel erfolgt, und der Verfahrensschritt g) unterbleibt oder erleichtert wird.

**23.** Verfahren gemäß mindestens einem der Ansprüche 19 bis 22, zur Herstellung eines Effektfarbmittels in Form einer Folie, **dadurch gekennzeichnet, dass** ein im ausgehärteten Zustand elastisch deformierbares Schalepolymer gewählt wird und der Verfahrensschritt g) unterbleibt.

**24.** Effektfarbmittel, das eine mit dem Beleuchtungs- und Betrachtungswinkel veränderliche Farbe aufweist, umfassend im wesentlichen sphärische Polymerpartikel und eine kontinuierliche Matrixphase, die entweder alle Zwischenräume zwischen den im wesentlichen sphärischen Polymerpartikeln ausfüllt oder nur im Bereich der Berührungspunkte der sphärischen Polymerpartikel Klebepunkte bildet, **dadurch gekennzeichnet, dass**

- die im Wesentlichen sphärischen Polymerpartikel zumindest Domänen regelmäßiger Anordnung bilden, die durch die Matrixphase fixiert werden,
- die im Wesentlichen sphärische Polymerpartikel eine Größe von 100 bis 700 nm und
- einen Polydispersitätsindex PI von unter 0,6 aufweisen
- dass das Gewichtsverhältnis von den im wesentlichen sphärische Polymerpartikeln zur Matrixphase 1,33 : 1 bis 20 : 1 beträgt und
- dass eine Differenz der Brechungsindices der im Wesentlichen sphärischen Polymerpartikel und der Matrixphase von mindestens 0,001 besteht.

**25.** Effektfarbmittel gemäß Anspruch 24, **dadurch gekennzeichnet, dass** im Wesentlichen sphärische Polymerpartikel eingesetzt werden, die einen Polydispersitätsindex PI von unter 0,4 aufweisen.

## Claims

**1.** Core-shell particles whose core and shell materials are capable of forming a two-phase system, **characterized in that**

- the shell material is filmable to form a matrix,
- the core is essentially form-stable under the conditions of filming the shell,
- the core is only very minimally swellable by the shell material, if at all,
- the cores are from 200 to 400 nm in size and have a polydispersity index of below 0.6,
- the core:shell weight ratio of the particles is in the range from 1.33:1 to 20:1, and
- there is a difference $\Delta n$ of at least 0.001 between the refractive indices of the core material and of the matrix resulting from filming the shell material.

**2.** Core-shell particles whose core and shell materials are capable of forming a two-phase system, **characterized in that**

- the shell material is filmable to form a matrix,

- the core is essentially form-stable under the conditions of filming the shell,
- the core is only very minimally swellable by the shell material, if at all,
- the cores are from 100 to 700 nm in size and have a polydispersity index of below 0.6,
- the core:shell weight ratio of the particles is in the range from 2.5:1 to 5:1, and
- there is a difference Δn of at least 0.001 between the refractive indices of the core material and of the matrix resulting from filming the shell material.

3. Core-shell particles as claimed in claim 2, **characterized in that** the cores are from 200 to 400 nm in size.

4. Core-shell particles as claimed in claim 1 or 2, **characterized in that** the difference Δn between the refractive indices of the shell and core materials is at least 0.01, especially at least 0.1.

5. Core-shell particles as claimed in at least one of claims 1 to 4, **characterized in that** the cores of the core-shell particles have a polydispersity index PDI of below 0.4, preferably below 0.3, especially below 0.2.

6. Core-shell particles as claimed in claim 1, **characterized in that** the core:shell weight ratio in the particles is within the range from 2.5:1 to 5:1.

7. Core-shell particles as claimed in at least one of claims 1 to 6, **characterized in that** the core comprises one or more polymers (core polymers), which are preferably crosslinked, and the shell comprises one or more polymers (shell polymers) or polymer precursors and optionally up to 40% by weight, preferably optionally up to 20% by weight, of auxiliary and additive substances and the shell, when in a nonswelling environment at room temperature, is essentially form-stable and nontacky.

8. Core-shell particles as claimed in at least one of claims 1 to 7, obtained by emulsion polymerization in an aqueous medium.

9. Solid preparations comprising from 70 to 99% by weight, preferably from 80 to 95% by weight, of core-shell particles as claimed in claim 1 or 2 and from 30 to 1% by weight, preferably from 20 to 5% by weight, of a mixture of auxiliary and/or additive substances which is solid at standard temperature.

10. Pasty or fluidic, especially spreadable, sprayable or pourable, preparations comprising from 5 to 75% by weight, preferably from 10 to 65% by weight, especially from 20 to 50% by weight, of core-shell particles as claimed in claim 1 or 2 and from 95 to 25% by weight, preferably from 90 to 35% by weight, especially from 80 to 50% by weight, of a mixture of dissolving, dispersing, auxiliary and/or additive substances which is liquid at standard temperature or becomes liquid at elevated temperature.

11. A process for preparing the core-shell particles of claim 1 comprising homogenizing core polymer prefabricated in a separate step with monomers or prepolymers of the shell polymers and if desired auxiliary and/or additive substances in an inert liquid reaction medium and incipiently or completely polymerizing the polymer precursors wherein the polymerization conditions are set such that the shell polymers or polymer precursors become deposited on the core particles, **characterized in**

- **that** monodisperse cores from 200 to 400 nm in size which have a polydispersity index PI of below 0.6 are used,
- **that** the monomers and/or prepolymers are selected according to amount and type such
- **that** the shell material is filmable, the core is essentially form-stable under the conditions of filming the shell,
- the core is only very minimally swellable by the shell material, if at all, and there is a difference of at least 0.001 between the refractive indices of the core material and of the matrix resulting from filming the shell material and
- **that** the core:shell weight ratio of the particles is in the range from 1.33:1 to 20:1.

12. A process for preparing the core-shell particles of claim 2 comprising homogenizing core polymer prefabricated in a separate step with monomers or prepolymers of the shell polymers and if desired auxiliary and/or additive substances in an inert liquid reaction medium and incipiently or completely polymerizing the polymer precursors wherein the polymerization conditions are set such that the shell polymers or polymer precursors become deposited on the core particles, **characterized in**

- **that** monodisperse cores from 200 to 400 nm in size which have a polydispersity index PI of below 0.6 are used,
- **that** the monomers and/or prepolymers are selected according to amount and type such

- **that** the shell material is filmable, the core is essentially form-stable under the conditions of filming the shell,
- the core is only very minimally swellable by the shell material, if at all, and there is a difference of at least 0.001 between the refractive indices of the core material and of the matrix resulting from filming the shell material and
- **that** the core:shell weight ratio of the particles is in the range from 2.5:5 to 20:1.

**13.** A process as claimed in claim 11 or 12, **characterized in that** the process is carried out as a two-step one-pot process, the core polymer particles being prepared from the selected polymer precursors (monomers and/or prepolymers) in the first reaction step and then being further processed as claimed in claim 11.

**14.** A process as claimed in at least one of claims 11 and 12, **characterized in that**, to produce preparations as claimed in claims 9 and 10, the polymerization of the shell polymers is carried out in the presence of all or some of the auxiliary and/or additive substances present in the preparation and optionally dispersing or diluting media, or these are wholly or partly added during or on completion of the polymerization, in which case the adds are chosen so that their mixture is solid or fluidic as required, and the inert reaction medium is wholly or partly removed after completion of the polymerization.

**15.** A process as claimed in at least one of claims 11 to 14, **characterized in that** the inert reaction medium is removed by evaporation, optionally under reduced pressure, by freeze drying or by spray drying.

**16.** The use of the core-shell particles whose core and shell materials are capable of forming a two-phase system, wherein

- the shell material is filmable to form a matrix,
- the core is essentially form-stable under the conditions of filming the shell,
- the core is only very minimally swellable by the shell material, if at all,
- the cores are from 100 to 700 nm in size and have a polydispersity index of below 0.6,
- the core:shell weight ratio of the particles is in the range from 1.33:1 to 20:1, and
- there is a difference Δn of at least 0.001 between the refractive indices of the core material and of the matrix resulting from filming the shell material,

or the preparations comprising from 70 to 99% by weight, preferably from 80 to 95% by weight, of core-shell particles whose core and shell materials are capable of forming a two-phase system, wherein

- the shell material is filmable to form a matrix,
- the core is essentially form-stable under the conditions of filming the shell,
- the core is only very minimally swellable by the shell material, if at all,
- the cores are from 100 to 700 nm in size and have a polydispersity index of below 0.6,
- the core:shell weight ratio of the particles is in the range from 1.33:1 to 20:1, and
- there is a difference Δn of at least 0.001 between the refractive indices of the core material and of the matrix resulting from filming the shell material,

and from 30 to 1% by weight, preferably from 20 to 5% by weight, of a mixture of auxiliary and/or additive substances which is solid at standard temperature or comprising from 5 to 75% by weight, preferably from 10 to 65% by weight, especially from 20 to 50% by weight, of core-shell particles whose core and shell materials are capable of forming a two-phase system, wherein

- the shell material is filmable to form a matrix,
- the core is essentially form-stable under the conditions of filming the shell,
- the core is only very minimally swellable by the shell material, if at all,
- the cores are from 100 to 700 nm in size and have a polydispersity index of below 0.6,
- the core:shell weight ratio of the particles is in the range from 1.33:1 to 20:1, and
- there is a difference Δn of at least 0.001 between the refractive indices of the core material and of the matrix resulting from filming the shell material,

and from 95 to 25% by weight, preferably from 90 to 35% by weight, especially from 80 to 50% by weight, of a mixture of dissolving, dispersing, auxiliary and/or additive substances which is liquid at standard temperature or becomes liquid at elevated temperature, for producing protective and/or decorative coatings.

**17.** A process for producing decorative and/or protective coatings by applying a coating composition in a conventional

manner to the pretreated or unpretreated material to be protected, **characterized in that** it comprises applying core-shell particles whose core and shell materials are capable of forming a two-phase system, wherein

- the shell material is filmable to form a matrix,
- the core is essentially form-stable under the conditions of filming the shell
- the core is only very minimally swellable by the shell material, if at all
- the cores are from 100 to 700 nm in size and have a polydispersity index of below 0.6
- the core:shell weight ratio of the particles is in the range from 1.33:1 to 20:1, and
- there is a difference Δn of at least 0.001 between the refractive indices of the core material and of the matrix resulting from filming the shell material,

or a preparation comprising from 70 to 99% by weight, preferably from 80 to 95% by weight, of core-shell particles whose core and shell materials are capable of forming a two-phase system, wherein

- the shell material is filmable to form a matrix,
- the core is essentially form-stable under the conditions of filming the shell
- the core is only very minimally swellable by the shell material, if at all
- the cores are from 100 to 700 nm in size and have a polydispersity index of below 0.6
- the core:shell weight ratio of the particles is in the range from 1.33:1 to 20:1, and

there is a difference Δn of at least 0.001 between the refractive indices of the core material and of the matrix resulting from filming the shell material, and from 30 to 1% by weight, preferably from 20 to 5% by weight, of a mixture of auxiliary and/or additive substances which is solid at standard temperature or comprising from 5 to 75% by weight, preferably from 10 to 65% by weight, especially from 20 to 50% by weight, of core-shell particles whose core and shell materials are capable of forming a two-phase system, wherein

- the shell material is filmable to form a matrix,
- the core is essentially form-stable under the conditions of filming the shell
- the core is only very minimally swellable by the shell material, if at all
- the cores are from 100 to 700 nm in size and have a polydispersity index of below 0.6
- the core:shell weight ratio of the particles is in the range from 1.33:1 to 20:1, and

there is a difference Δn of at least 0.001 between the refractive indices of the core material and of the matrix resulting from filming the shell material, and from 95 to 25% by weight, preferably from 90 to 35% by weight, especially from 80 to 50% by weight, of a mixture of dissolving, dispersing, auxiliary and/or additive substances which is liquid at standard temperature or becomes liquid at elevated temperature" removing any liquid dispersing and/or diluting medium present and subsequently filming and if desired crosslinking the shell material and so orienting the cores.

**18.** The use of the core-shell particles whose core and shell materials are capable of forming a two-phase system, wherein

- the shell material is filmable to form a matrix,
- the core is essentially form-stable under the conditions of filming the shell
- the core is only very minimally swellable by the shell material, if at all
- the cores are from 100 to 700 nm in size and have a polydispersity index of below 0.6
- the core:shell weight ratio of the particles is in the range from 1.33:1 to 20:1, and

there is a difference Δn of at least 0.001 between the refractive indices of the core material and of the matrix resulting from filming the shell material, or of the preparations comprising from 70 to 99% by weight, preferably from 80 to 95% by weight, of core-shell particles whose core and shell materials are capable of forming a two-phase system, wherein

- the shell material is filmable to form a matrix,
- the core is essentially form-stable under the conditions of filming the shell
- the core is only very minimally swellable by the shell material, if at all
- the cores are from 100 to 700 nm in size and have a polydispersity index of below 0.6
- the core:shell weight ratio of the particles is in the range from 1.33:1 to 20:1, and

there is a difference Δn of at least 0.001 between the refractive indices of the core material and of the matrix resulting

from filming the shell material, and from 30 to 1% by weight, preferably from 20 to 5% by weight, of a mixture of auxiliary and/or additive substances which is solid at standard temperature or comprising from 5 to 75% by weight, preferably from 10 to 65% by weight, especially from 20 to 50% by weight, of core-shell particles whose core and shell materials are capable of forming a two-phase system, wherein

- the shell material is filmable to form a matrix,
- the core is essentially form-stable under the conditions of filming the shell
- the core is only very minimally swellable by the shell material, if at all
- the cores are from 100 to 700 nm in size and have a polydispersity index of below 0.6
- the core:shell weight ratio of the particles is in the range from 1.33:1 to 20:1, and

there is a difference Δn of at least 0.001 between the refractive indices of the core material and of the matrix resulting from filming the shell material, and from 95 to 25% by weight, preferably from 90 to 35% by weight, especially from 80 to 50% by weight, of a mixture of dissolving, dispersing, auxiliary and/or additive substances which is liquid at standard temperature or becomes liquid at elevated temperature, for preparing effect colorants.

**19.** A process for preparing an effect colorant, comprising the following steps:

a) applying core-shell particles whose core and shell materials are capable of forming a two-phase system, **characterized in that**

- the shell material is filmable,
- the core is essentially form-stable under the conditions of filming the shell,
- the core is only very minimally swellable by the shell material, if at all,
- the core:shell ratio of the particles is in the range from 1.33:1 to 20:1,
- the cores are from 100 to 700 nm in size and
- have a polydispersity index PI of below 0.6,
- there is a difference Δn of at least 0.001 between the refractive indices of the core material and of the
- shell material,
- or a preparation thereof to a substrate of low adhesivity,

b) if necessary evaporating or expelling any solvent or diluent present in the applied layer,
c) converting the shell material of the core-shell particles into a liquid, soft or viscoelastic matrix phase,
d) orienting the cores of the core-shell particles at least into domains of regular structure,
e) curing the shell material to fix the regular core structure,
f) detaching the cured film from the substrate, and g) comminuting the detached film to the desired particle size if a pigment or powder is to be prepared.

**20.** A process for preparing an effect colorant, comprising the following steps:

a) applying core-shell particles whose core and shell materials are capable of forming a two-phase system, **characterized in that**

- the shell material is filmable,
- the core is essentially form-stable under the conditions of filming the shell,
- the core is only very minimally swellable by the shell material, if at all,
- the core:shell ratio of the particles is in the range from 2.5:1 to 5:1,
- the cores are from 100 to 700 nm in size and
- have a polydispersity index PI of below 0.6,
- there is a difference Δn of at least 0.001 between the refractive indices of the core material and of the
- shell material,
- or a preparation thereof to a substrate of low adhesivity,

b) if necessary evaporating or expelling any solvent or diluent present in the applied layer,
c) converting the shell material of the core-shell particles into a liquid, soft or viscoelastic matrix phase,
d) orienting the cores of the core-shell particles at least into domains of regular structure,
e) curing the shell material to fix the regular core structure,
f) detaching the cured film from the substrate, and

g) comminuting the detached film to the desired particle size if a pigment or powder is to be prepared.

**21.** A process as claimed in claim 19 or 20, **characterized in that** it utilizes core-shell particles whose cores have a poly-dispersity index PI of below 0.4.

**22.** A process as claimed in at least one of claims 19, 20 or 21 for preparing an effect colorant in the form of a pigment, **characterized in that** the applying as per step a) is effected in the form of a multiplicity of dots in the size of the desired pigment particles to facilitate or obviate step g).

**23.** A process as claimed in at least one of claims 19 to 22 for preparing an effect colorant in the form of a film, **characterized in that** a shell polymer which is elastically deformable in the cured state is selected and step g) is omitted.

**24.** An effect colorant which has a color which is variable with the illumination and viewing angle, comprising essentially spherical polymer particles and a continuous matrix phase which either fills out all interstitial spaces between the essentially spherical polymer particles or forms adhesive dots only in the region of the contact points between the spherical polymer particles, **characterized in that**

- the essentially spherical polymer particles form at least domains of regular structure which are fixed by the matrix phase,
- the essentially spherical polymer particles are from 100 to 700 nm in size and
- have a polydispersity index PI of below 0.6,
- **in that** the weight ratio of the essentially spherical polymer particles to the matrix phase is in the range from 1.33:1 to 20:1 and
- **in that** there is a difference of at least 0.001 between the refractive indices of the essentially spherical polymer particles and of the matrix phase.

**25.** An effect colorant as claimed in claim 24, **characterized in that** the essentially spherical polymer particles used have a polydispersity index PI of below 0.4.

**Revendications**

**1.** Particules coeur/coquille, dont les matériaux de coeur et de coquille peuvent former un système diphasique, **caractérisées en ce que**

- le matériau de coquille peut être transformé en un film pour donner une matrice,
- le coeur présente pour l'essentiel une stabilité dimensionnelle dans les conditions de formation d'un film de la coquille,
- le coeur ne peut gonfler, ou alors seulement dans une très faible mesure, sous l'effet du matériau de coquille,
- les coeurs ont une granulométrie de 200 à 400 nm et un indice de polydispersité inférieur à 0,6,
- le rapport en poids du coeur à la coquille dans les particules est de 1,33 :1 à 20 :1, et
- il existe une différence $\Delta n$ d'au moins 0,001 entre l'indice de réfraction du matériau de coeur et celui de la matrice qui se forme lors de la création du film du matériau de coquille.

**2.** Particules coeur/coquille, dont les matériaux de coeur et de coquille peuvent former un système diphasique, **caractérisées en ce que**

- le matériau de coquille peut être transformé en un film pour donner une matrice,
- le coeur présente pour l'essentiel une stabilité dimensionnelle dans les conditions de formation d'un film de la coquille,
- le coeur ne peut gonfler, ou alors seulement dans une très faible mesure, sous l'effet du matériau de coquille,
- les coeurs ont une granulométrie de 100 à 700 nm et un indice de polydispersité inférieur à 0,6,
- le rapport en poids du coeur à la coquille dans les particules est de 2,5 :1 à 5 :1, et
- il existe une différence $\Delta n$ d'au moins 0,001 entre l'indice de réfraction du matériau de coeur et celui de la matrice qui se forme lors de la création du film du matériau de coquille.

**3.** Particules coeur/coquille selon la revendication 2, **caractérisées en ce que** le coeur des particules coeur/coquille

a une granulométrie de 200 à 400 nm.

4. Particules coeur/coquille selon la revendication 1 ou 2, **caractérisées en ce que** la différence Δn entre l'indice de réfraction du matériau de coquille et celui du matériau de coeur est d'au moins 0,01 et en particulier d'au moins 0,1.

5. Particules coeur/coquille selon au moins l'une des revendications 1 à 4, **caractérisées en ce que** les coeurs des particules coeur/coquille ont un indice de polydispersité P.I. inférieur à 0,4, de préférence inférieur à 0,3, en particulier inférieur à 0,2.

6. Particules coeur/coquille selon la revendication 1, **caractérisées en ce que** le rapport en poids du coeur à la coquille des particules est de 2,5:1 à 5:1.

7. Particules coeur/coquille selon au moins l'une des revendications 1 à 6, **caractérisées en ce que** le coeur contient un ou plusieurs polymères (polymères de coeur), qui de préférence sont réticulés, et la coquille contient un ou plusieurs polymères (polymères de coquille) ou des précurseurs de polymères et éventuellement jusqu'à 40 % en poids et de préférence éventuellement jusqu'à 20 % en poids de substances auxiliaires et d'additifs, et la coquille, dans un environnement non gonflant, présente pour l'essentiel une stabilité dimensionnelle et est non collante à la température ambiante.

8. Particules coeur/coquille selon au moins l'une des revendications 1 à 7, obtenues par polymérisation en émulsion en milieu aqueux.

9. Préparations solides comprenant 70 à 99 % en poids, de préférence 80 à 95 % en poids de particules coeur/coquille selon la revendication 1 ou 2 et 30 à 1 % en poids, de préférence 20 à 5 % en poids d'un mélange de substances, solides à la température ambiante, constitué de substances auxiliaires et/ou d'additifs.

10. Préparations pâteuses ou fluides, en particulier aptes à l'enduction, au pistolage ou à la coulée, comprenant 5 à 75 % en poids, de préférence 10 à 65 % en poids, en particulier 20 à 50 % en poids de particules coeur/coquille selon la revendication 1 ou 2 et 95 à 25 % en poids, de préférence 90 à 35 % en poids, en particulier 80 à 50 % en poids d'un mélange de substances, qui est liquide à la température ambiante ou n'est liquide qu'à température élevée, constitué de solvants, de dispersants ou de substances auxiliaires et/ou d'additifs.

11. Procédé de préparation des particules coeur/coquille selon la revendication 1, dans lequel, dans une étape distincte du procédé, on homogénéise des coeurs préfabriqués, constitués de polymères de coeur, avec des monomères ou des prépolymères des polymères de coquille et éventuellement des substances auxiliaires et/ou des additifs dans un milieu réactionnel liquide inerte, puis on lance ou on termine la polymérisation des précurseurs de polymères, les conditions de polymérisation étant ajustées de telle sorte que les polymères de coquille ou les précurseurs de polymères se déposent sur les particules de coeur, **caractérisé en ce que**

   - on utilise des coeurs monodispersés ayant une granulométrie de 200 à 400 nm et un indice de polydispersité PI inférieur à 0,6,
   - les monomères et/ou prépolymères sont choisis, pour ce qui est de leur nature et de leur quantité, de telle sorte que le matériau de coquille puisse être transformé en un film, que le coeur présente pour l'essentiel une stabilité dimensionnelle dans les conditions de formation d'un film de la coquille, que le coeur ne puisse gonfler, ou seulement dans une très faible mesure, sous l'effet du matériau de coquille, et qu'il existe une différence entre l'indice de réfraction du matériau de coeur et celui de la matrice formée lors de la formation du film du matériau de coquille, d'au moins 0,001, et
   - le rapport en poids du coeur à la coquille des particules est de 1,33 :1 à 20 :1.

12. Procédé de préparation des particules coeur/coquille selon la revendication 2, dan lequel, dans une étape distincte du procédé, on homogénéise des coeurs préfabriqués, constitués de polymères de coeur, avec des monomères ou des prépolymères de coquille et éventuellement des substances auxiliaires et/ou des additifs dans un milieu réactionnel liquide inerte, puis on lance ou on termine la polymérisation des précurseurs de polymères, les conditions de polymérisation étant ajustées de telle sorte que les polymères de coquille ou les précurseurs de polymères se déposent sur les particules de coeur, **caractérisé en ce que**

   - on utilise des coeurs monodispersés ayant une granulométrie de 100 à 700 nm et un indice de polydispersité PI inférieur à 0,6,

- les monomères et/ou prépolymères sont choisis, pour ce qui est de leur nature et de leur quantité, de telle sorte que le matériau de coquille puisse être transformé en un film, que le coeur présente pour l'essentiel une stabilité dimensionnelle dans les conditions de formation d'un film de la coquille, que le coeur ne puisse gonfler, ou seulement dans une très faible mesure, sous l'effet du matériau de coquille, et qu'il existe une différence entre l'indice de réfraction du matériau de coeur et celui de la matrice formée lors de la formation du film du matériau de coquille, d'au moins 0,001, et
- le rapport en poids du coeur à la coquille des particules est de 2,5 :1 à 5 :1.

**13.** Procédé selon la revendication 1 ou 12, **caractérisé en ce que** le procédé est mis en oeuvre d'une manière monotype en deux étapes, les particules de polymères de coeur étant préparées dans la première étape de la réaction à partir des précurseurs de polymères sélectionnés (monomères et/ou prépolymères), puis elles sont soumises à un post-traitement selon la revendication 11.

**14.** Procédé selon au moins l'une des revendications 11 et 12, **caractérisé en ce que**, pour fabriquer les préparations des revendications 9 et 10, la polymérisation des polymères de coquille est mise en oeuvre en présence de la totalité ou d'une partie des substances auxiliaires et/ou additifs et éventuellement des dispersants ou diluants contenus dans la préparation, ou encore **en ce que** ces derniers sont, en totalité ou en partie, ajoutés pendant ou après la polymérisation, les additions étant choisies de telle sorte que leur mélange soit, selon les besoins, solide ou fluide, et que, après la fin de la polymérisation, on élimine en totalité ou en partie le milieu réactionnel inerte.

**15.** Procédé selon au moins l'une des revendications 11 à 14, **caractérisé en ce que** le milieu réactionnel est éliminé par évaporation, éventuellement sous vide, par lyophilisation ou par séchage par atomisation.

**16.** Utilisation des particules coeur/coquille dont les matériaux de coeur et de coquille peuvent former un système diphasique, **caractérisées en ce que**

- le matériau de coquille peut être transformé en un film pour donner une matrice,
- le coeur présente pour l'essentiel une stabilité dimensionnelle dans les conditions de formation d'un film de la coquille,
- le coeur ne peut gonfler, ou alors seulement dans une très faible mesure, sous l'effet du matériau de coquille,
- les coeurs ont une granulométrie de 100 à 700 nm et un indice de polydispersité inférieur à 0,6,
- le rapport en poids du coeur à la coquille dans les particules est de 1,33 :1 à 20:1, et
- il existe une différence Δn d'au moins 0,001 entre l'indice de réfraction du matériau de coeur et celui de la matrice qui se forme lors de la création du film du matériau de coquille, ou des préparations comprenant 70 à 99 % en poids, de préférence 80 à 95 % en poids de particules coeur/coquille selon la revendication 1 et 30 à 1 % en poids, de préférence 20 à 5 % en poids d'un mélange de substances, solides à la température ambiante, constitué de substances auxiliaires et/ou d'additifs, ou comprenant 5 à 75 % en poids, de préférence 10 à 65 % en poids, en particulier 20 à 50 % en poids de particules coeur/coquille, dont les matériaux de coeur et de coquille peuvent former un système diphasique, **caractérisées en ce que**
- le matériau de coquille peut être transformé en un film pour donner une matrice,
- le coeur présente pour l'essentiel une stabilité dimensionnelle dans les conditions de formation d'un film de la coquille,
- le coeur ne peut gonfler, ou alors seulement dans une très faible mesure, sous l'effet du matériau de coquille,
- les coeurs ont une granulométrie de 100 à 700 nm et un indice de polydispersité inférieur à 0,6,
- le rapport en poids du coeur à la coquille dans les particules est de 1,33 :1 à 20 :1, et
- il existe une différence Δn d'au moins 0,001 entre l'indice de réfraction du matériau de coeur et celui de la matrice qui se forme lors de la création du film du matériau de coquille et 95 à 25 % en poids, de préférence 90 à 35 % en poids, en particulier 80 à 50 % en poids d'un mélange de substances, qui est liquide à la température ambiante ou n'est liquide qu'à température élevée, constitué de solvants, de dispersants ou de substances auxiliaires et/ou d'additifs, pour préparer des revêtements protecteurs et/ou décoratifs.

**17.** Procédé de production de revêtements décoratifs et/ou protecteurs par application d'une masse de revêtement d'une manière connue en soi sur le matériau devant être protégé, éventuellement prétraité, **caractérisé en ce qu'**on applique des particules coeur/coquille, dont les matériaux de coeur et de coquille peuvent former un système diphasique, **caractérisées en ce que**

- le matériau de coquille peut être transformé en un film pour donner une matrice,
- le coeur présente pour l'essentiel une stabilité dimensionnelle dans les conditions de formation d'un film de

la coquille,
- le coeur ne peut gonfler, ou alors seulement dans une très faible mesure, sous l'effet du matériau de coquille,
- les coeurs ont une granulométrie de 100 à 700 nm et un indice de polydispersité inférieur à 0,6,
- le rapport en poids du coeur à la coquille dans les particules est de 1,33 :1 à 20 :1, et
- il existe une différence Δn d'au moins 0,001 entre l'indice de réfraction du matériau de coeur et celui de la matrice qui se forme lors de la création du film du matériau de coquille, ou une préparation comprenant 70 à 99 % en poids, de préférence 80 à 95 % en poids de particules coeur/coquille selon la revendication 1 et 30 à 1 % en poids, de préférence 20 à 5 % en poids d'un mélange de substances, solides à la température ambiante, constitué de substances auxiliaires et/ou d'additifs, ou comprenant 5 à 75 % en poids, de préférence 10 à 65 % en poids, en particulier 20 à 50 % en poids de particules coeur/coquille, dont les matériaux de coeur et de coquille peuvent former un système diphasique, **caractérisées en ce que**
- le matériau de coquille peut être transformé en un film pour donner une matrice,
- le coeur présente pour l'essentiel une stabilité dimensionnelle dans les conditions de formation d'un film de la coquille,
- le coeur ne peut gonfler, ou alors seulement dans une très faible mesure, sous l'effet du matériau de coquille,
- les coeurs ont une granulométrie de 100 à 700 nm et un indice de polydispersité inférieur à 0,6,
- le rapport en poids du coeur à la coquille dans les particules est de 1,33 :1 à 20:1, et
- il existe une différence Δn d'au moins 0,001 entre l'indice de réfraction du matériau de coeur et celui de la matrice qui se forme lors de la création du film du matériau de coquille et 95 à 25 % en poids, de préférence 90 à 35 % en poids, en particulier 80 à 50 % en poids d'un mélange de substances, qui est liquide à la température ambiante ou n'est liquide qu'à température élevée, constitué de solvants, de dispersants ou de substances auxiliaires et/ou d'additifs, on élimine le dispersant et/ou le diluant liquide éventuellement présent, puis on transforme le matériau de coquille en un film, et éventuellement on le réticule, ce à l'occasion de quoi on oriente les coeurs.

**18.** Utilisation des particules coeur/coquille, dont les matériaux de coeur et de coquille peuvent former un système diphasique, **caractérisées en ce que**

- le matériau de coquille peut être transformé en un film pour donner une matrice,
- le coeur présente pour l'essentiel une stabilité dimensionnelle dans les conditions de formation d'un film de la coquille,
- le coeur ne peut gonfler, ou alors seulement dans une très faible mesure, sous l'effet du matériau de coquille,
- les coeurs ont une granulométrie de 100 à 700 nm et un indice de polydispersité inférieur à 0,6,
- le rapport en poids du coeur à la coquille dans les particules est de 1,33 :1 à 20 :1, et
- il existe une différence Δn d'au moins 0,001 entre l'indice de réfraction du matériau de coeur et celui de la matrice qui se forme lors de la création du film du matériau de coquille, ou des préparations comprenant 70 à 99 % en poids, de préférence 80 à 95 % en poids de particules coeur/coquille selon la revendication 1 et 30 à 1 % en poids, de préférence 20 à 5 % en poids d'un mélange de substances, solides à la température ambiante, constitué de substances auxiliaires et/ou d'additifs, ou comprenant 5 à 75 % en poids, de préférence 10 à 65 % en poids, en particulier 20 à 50 % en poids de particules coeur/coquille, dont les matériaux de coeur et de coquille peuvent former un système diphasique, **caractérisées en ce que**
- le matériau de coquille peut être transformé en un film pour donner une matrice,
- le coeur présente pour l'essentiel une stabilité dimensionnelle dans les conditions de formation d'un film de la coquille,
- le coeur ne peut gonfler, ou alors seulement dans une très faible mesure, sous l'effet du matériau de coquille,
- les coeurs ont une granulométrie de 100 à 700 nm et un indice de polydispersité inférieur à 0,6,
- le rapport en poids du coeur à la coquille dans les particules est de 1,33 :1 à20:1,et
- il existe une différence Δn d'au moins 0,001 entre l'indice de réfraction du matériau de coeur et celui de la matrice qui se forme lors de la création du film du matériau de coquille et 95 à 25 % en poids, de préférence 90 à 35 % en poids, en particulier 80 à 50 % en poids d'un mélange de substances, qui est liquide à la température ambiante ou n'est liquide qu'à température élevée, constitué de solvants, de dispersants ou de substances auxiliaires et/ou d'additifs, pour fabriquer des matières colorants à effet décoratif.

**19.** Procédé de fabrication d'une matière colorante à effet décoratif, comprenant les étapes suivantes:

a) application de particules coeur/coquille, dont les matériaux de coeur et de coquille peuvent former un système diphasique, **caractérisée en ce que**

- le matériau de coquille peut être transformé en un film,
- le coeur présente pour l'essentiel une stabilité dimensionnelle dans les conditions de formation du film de la coquille,
- le coeur ne peut gonfler, ou seulement dans une très faible mesure, sous l'effet du matériau de coquille,
- le rapport en poids du coeur à la coquille des particules est de 1,33 :1 à 20 :1,
- la granulométrie des coeurs est de 100 à 700 nm, et
- les coeurs ont un indice de polydispersité PI inférieur à 0,6,
- il existe une différence Δn d'au moins 0,001 entre l'indice de réfraction du matériau de coeur et celui du matériau de coquille,
- ou encore d'une préparation de ces particules sur un substrat ayant une faible adhérence,

b) éventuellement, évaporation ou élimination du solvant ou du diluant éventuellement contenu dans la couche appliquée,
c) conversion du matériau de coquille des particules coeur/coquille en une phase de matrice liquide, souple ou viscoélastique,
d) orientation des coeurs des particules coeur/coquille, au moins en des domaines ayant une structure régulière,
e) durcissement complet du matériau de coquille pour fixer la structure régulière de coeur,
f) élimination, par dissolution, du film durci du substrat, et
g) dans la mesure où l'on veut préparer un pigment ou une poudre, broyage du film éliminé par dissolution jusqu'à la granulométrie souhaitée.

**20.** Procédé de fabrication d'une matière colorante à effet décoratif, comprenant les étapes suivantes :

a) application de particules coeur/coquille, dont les matériaux de coeur et de coquille peuvent former un système diphasique, **caractérisée en ce que**

- le matériau de coquille peut être transformé en un film,
- le coeur présente pour l'essentiel une stabilité dimensionnelle dans les conditions de formation du film de la coquille,
- le coeur ne peut gonfler, ou seulement dans une très faible mesure, sous l'effet du matériau de coquille,
- le rapport en poids du coeur à la coquille des particules est de 2,5 :1 à 5 :1,
- la granulométrie des coeurs est de 100 à 700 nm, et
- les coeurs ont un indice de polydispersité PI inférieur à 0,6,
- il existe une différence Δn d'au moins 0,001 entre l'indice de réfraction du matériau de coeur et celui du matériau de coquille,
- ou encore d'une préparation de ces particules sur un substrat ayant une faible adhérence,

b) éventuellement, évaporation ou élimination du solvant ou du diluant éventuellement contenu dans la couche appliquée,
c) conversion du matériau de coquille des particules coeur/coquille en une phase de matrice liquide, souple ou viscoélastique,
d) orientation des coeurs des particules coeur/coquille, au moins en des domaines ayant une structure régulière,
e) durcissement complet du matériau de coquille pour fixer la structure régulière de coeur,
f) élimination, par dissolution, du film durci du substrat, et
g) dans la mesure où l'on veut préparer un pigment ou une poudre, broyage du film éliminé par dissolution jusqu'à la granulométrie souhaitée.

**21.** Procédé selon la revendication 19 ou 20, **caractérisé en ce qu'**on utilise des particules coeur/coquille dont les coeurs ont un indice de polydispersité PI inférieur à 0,4.

**22.** Procédé selon au moins l'une des revendications 19, 20 ou 21, pour préparer une matière colorante à effet décoratif sous forme d'un pigment, **caractérisé en ce que** l'application selon l'étape a) du procédé s'effectue sous forme d'un grand nombre de points ayant la taille des particules pigmentaires souhaitée, et l'étape g) du procédé est omise ou est simplifiée.

**23.** Procédé selon au moins l'une des revendications 19 à 22, pour préparer une matière colorante à effet décoratif sous forme d'une feuille, **caractérisé en ce qu'**on choisit un polymère de coquille pouvant subir une déformation élastique à l'état durci, et on omet l'étape g) du procédé.

**24.** Matière colorante à effet décoratif, qui présente une couleur pouvant varier selon l'angle d'éclairement et l'angle d'observation, comportant pour l'essentiel des particules polymères sphériques et une phase de matrice continue, qui remplit tous les espaces intermédiaires entre les particules polymères pour l'essentiel sphériques, ou alors ne forme des points de collage que dans la zone des points de contact des particules polymères sphériques, **caractérisée en ce que**

- les particules polymères pour l'essentiel sphériques forment au moins des domaines selon une disposition régulière, qui sont fixés par la phase de matrice,
- les particules polymères pour l'essentiel sphériques ont une granulométrie de 100 à 700 nm, et
- elles ont un indice de polydispersité PI inférieur à 0,6,
- **en ce que** le rapport en poids des particules polymères pour l'essentiel sphériques à la phase de matrice est de 1,33 :1 à 20 :1, et
- **en ce qu'**il existe une différence d'au moins 0,001 entre l'indice de réfraction des particules polymères pour l'essentiel sphériques et la phase de matrice.

**25.** Matière colorante à effet décoratif selon la revendication 24, **caractérisée en ce qu'**on utilise des particules polymères pour l'essentiel sphériques qui présentent un indice de polydispersité PI inférieur à 0,4.

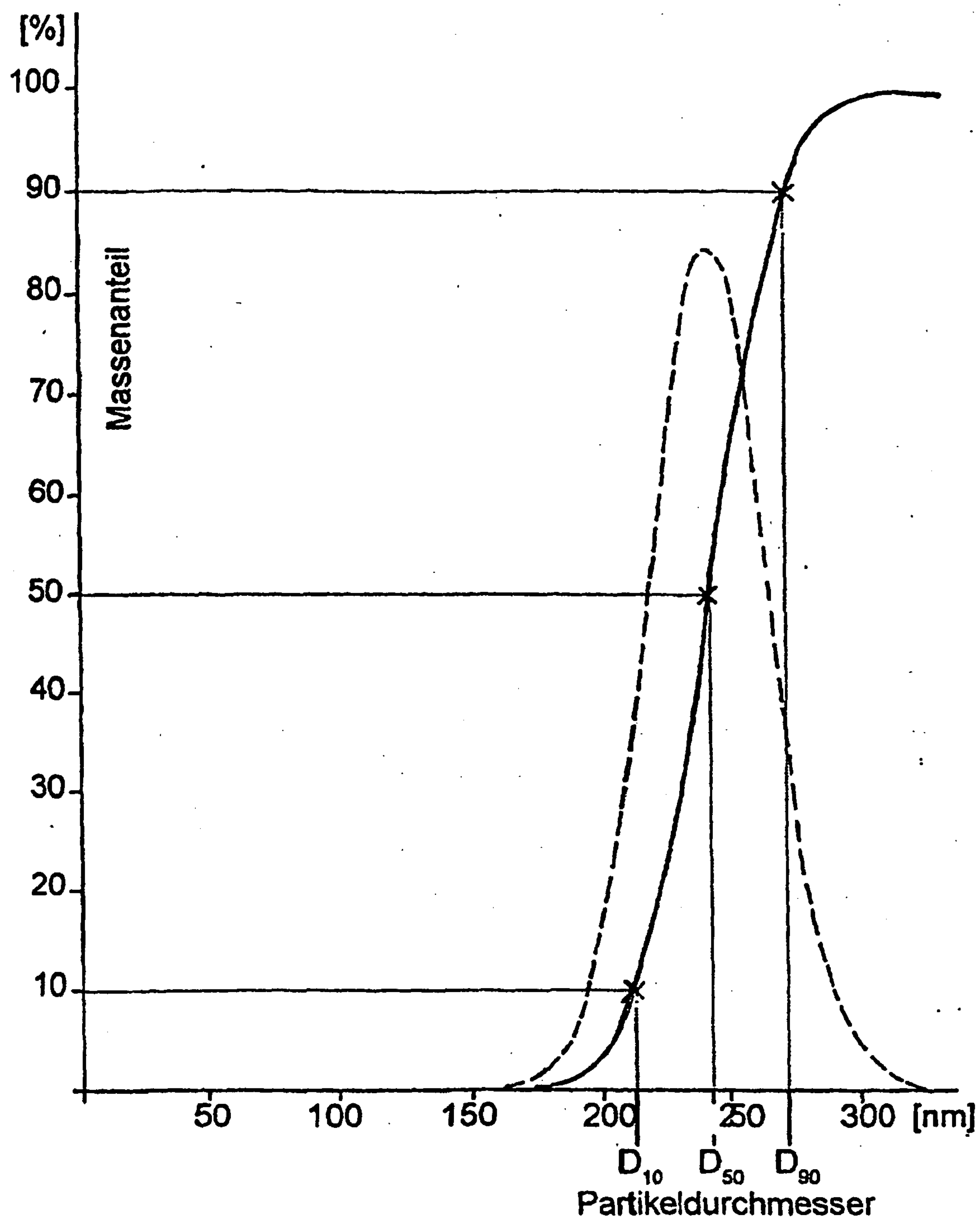
[%]
100
90
80
70
60
50
40
30
20
10
Massenanteil
50
100
150
200
250
300 [nm]
$D_{10}$
$D_{50}$
$D_{90}$
Partikeldurchmesser

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4434010 A
- US 5364557 A
- WO 9602597 A
- EP 0639590 A
- EP 0292261 A
- EP 0441559 A


### In der Beschreibung aufgeführte Nicht-Patentliteratur


- **YOUNG-SAM KIM.** Synthese und Charakterisierung von mehrphasigen polymeren Latices mit Kern/Schale-Morphologie. Verlag Shaker Aachen, 1993, 2-22
- **W.-M. BILLIG-PETERS.** *Kern-Schale-Polymere mit Hilfe polymerer Azoinitiatoren,* 1991
- **T. OKUBU.** *Prog.Polym.Sci.,* 1993, vol. 18, 481-517
- **W. LUCK ; H. WESSLAU.** *Festschrift Carl Wurstler,* 1960, vol. 55, 14009
- **A.RUDIN.** *J.Polym.Sci.,A. Polym.Sci.,* 1995, vol. 33, 1849-1857
- *SCIENCE,* 1996, vol. 274, 959-960
- **W.MÄCHTLE.** *Makromol.Chem.,* 1984, vol. 185, 1025-1039
- Polymer-Handbook. J.Wiley, vol. 3